# EUROPEAN PATENT SPECIFICATION

(11) **EP 3 255 612 B1**
(45) Date of publication and mention of the grant of the patent: **09.12.2020**
(21) Application number: 17173225.8
(22) Date of filing: 29.05.2017
(51) Int. Cl.: G06T 17/20, G06T 15/00

(54) **SYSTEM AND METHOD FOR TESSELLATION IN AN IMPROVED GRAPHICS PIPELINE**
SYSTEM UND VERFAHREN ZUR TESSELLIERUNG IN EINER VERBESSERTEN GRAFIK-PIPELINE
SYSTÈME ET PROCÉDÉ DE TESSELLATION DANS UN PIPELINE GRAPHIQUE AMÉLIORÉ

(30) Priority: 12.06.2016 US 201662349023 P; 23.09.2016 US 201615275275
(43) Date of publication of application: 13.12.2017
(73) Proprietor: Apple Inc., Cupertino CA 95014 (US)
(72) Inventor: MUNSHI, Aaftab A., Cupertino, CA, 95014 (US); HARRIS, Michael B., Cupertino, CA, 95014 (US); TIKHONOVA, Anna, Cupertino, CA, 95014 (US); BRISSART, Charles, Cupertino, CA, 95014 (US); DASARI, Srinivas, Cupertino, CA, 95014 (US); JOSHI, Rahul, Cupertino, CA, 95014 (US); CHIU, Kelvin C., Cupertino, CA, 95014 (US); WANG, Mon Ping, Cupertino, CA, 95014 (US); BURNS, Nick W., Cupertino, CA, 95014 (US)
(74) Representative: Lang, Johannes

(56) References cited:
- US-A1- 2016 155 209
- John Kloetzli: "D3D11 Software Tessellation", , 21 March 2014 (2014-03-21), XP055415112, Retrieved from the Internet: URL:http://twvideo01.ubm-us.net/o1/vault/G DC2014/Presentations/Kloetzli_John_Advance d_Visual_Effects.pdf [retrieved on 2017-10-12]
- Anonymous: "Tessellation", , 12 December 2016 (2016-12-12), XP055415146, Retrieved from the Internet: URL:https://developer.apple.com/library/co ntent/documentation/Miscellaneous/Conceptu al/MetalProgrammingGuide/Tessellation/Tess ellation.html [retrieved on 2017-10-12]

## Description

### BACKGROUND

The disclosed subject matter relates to the field of graphics processing and, without limitation, systems and methods relating to tessellating in a graphics pipeline.

Graphics processing units (GPUs) have become important for processing data-parallel graphics tasks. Developers now recognize that non-graphics data-parallel tasks can also be handled by GPUs, taking advantage of their massively parallel capabilities. Vendors and standards organizations have created application programming interfaces (APIs) that make graphics data-parallel tasks easier to program. There are also low-level APIs (or libraries/frameworks, *etc.*) that reside closer to hardware and are generally employed by applying the output of the higher-level APIs. In other words, the higher-level APIs generally simply prepare output for consumption by the lower-level APIs.

GPUs commonly use programs called shader programs or shaders. One common example of a shader is a program that operates on a pixels (or the computational equivalent). In addition to shaders, GPUs may execute programs generally called Kernels. Like shaders, kernels are generally programs used in parallel execution, but kernels differ from shaders in that kernels are used for compute functions rather than simply shading.

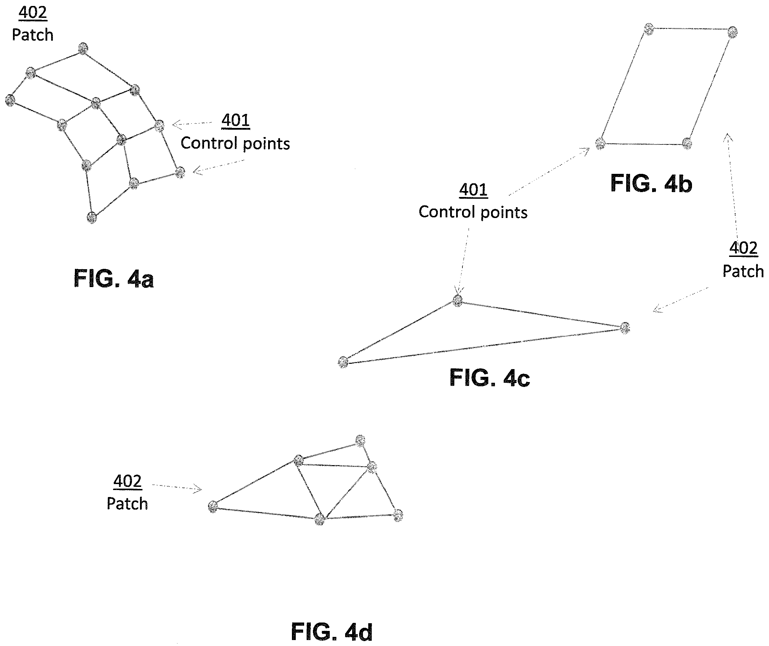

Kernels or shaders may be used in a graphics pipeline as part of a tessellation process. In graphics, tessellation refers to the subdivision of graphics sections (*e.g*., "patches") for rendering. If a section is more subdivided, the rendered graphic will be more refined and show more detail. Referring to FIG. 4a, there is shown a patch (or a collection of joined patches) 402, which represents a portion of the graphic submitted for rendering in a graphics system. In general, a patch is composed of one or more polygons that may model a graphic that is more precisely described mathematically or otherwise. By way of background, the shape of a patch may often be described or altered with control points 401. As the control points are moved about, the patch changes shape or aspect. To be clear, the patch (or group of joined patches) 402 of FIG. 4a is defined by 12 control points 401. Depending upon developer preference and hardware limitations, patches may be simple or complex and often represent a quad or triangular portion of a graphic as shown in alternative examples of FIGs. 4b, 4c, and 4d.

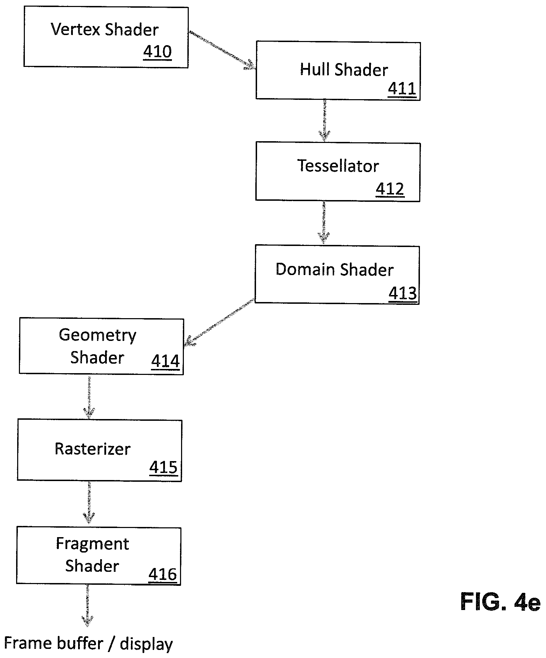

Referring to FIG. 4e, there is shown a graphics pipeline (or part thereof) that is generally associated with Direct3D 11 (*i.e.* part of DirectX 11, hereinafter referred to as DX11). FIG. 4e shows a pipeline having tessellation portions 411, 412, and 413 and as well as surrounding portions 410, 414, 415 and 416. The manner of expressing a pipeline may vary between skilled artisans. Thus, this illustration and others of its type in this disclosure are intended merely to illuminate concepts and not intended as statements that rigidly confine the teachings or examples (unless particularly specified). In greater particularity, the surrounding portions shown are vertex shader 410, geometry shader 414, rasterizer 415, and fragment shader 416. The tessellation portions shown in FIG. 4e are "hull" shader 411, tessellator 412 (which is generally not programmable), and domain shader 413.

### Vertex shader

A vertex shader 410 is a common type of 3D shader that operates on a single vertex, meaning that it takes a single vertex as input and produces a single vertex as output. Most commonly the purpose of a vertex shader is to transform a 3D point in virtual space (*e.g.* a model) to a 2D point (and potentially a depth value) that will appear on a screen. Vertex shaders are known in the art and generally allow control over graphics aspects such as position, movement, lighting and color. Vertex shaders do not create new vertices.

### Hull Shader

A hull shader 411 is a programmable shader that is generally used to indicate how much tessellation should occur in a patch and where. A developer or a system uses tessellation factors to indicate the level of tessellation desired for the patch being processed and the areas in the patch where there should be more or less tessellation. Any number of tessellation factors may be used and many are known in the art. Some example tessellation factors are provided below in examples of embodiment implementations. A hull shader receives a patch (*e.g.* patch control points) as input and produces a patch (*e.g.* patch control points) as output. The hull shader may transform the input control points that define a low-order surface into the output control points that describe a patch. In some examples, the hull shader transforms basis function from a base mesh to surface patches. The hull shader may also perform calculations and provide data (*e.g.* patch constant data) for later portions or the pipeline (*e.g*., the tessellator and the domain shader). In some examples, the hull shader receives a group of vertices or control points representing a patch (*e.g*. between 1 and 32 control points), and outputs a user-defined number (*e.g*. between 1 and 32) of control points that represent the output patch. For example, if there are more control points in the output patch, then more tessellation will be used on the patch.

### Tessellator

Tessellator 412 is a fixed-function portion of the pipeline that creates a sampling pattern across a surface associated with a patch and generates primitives (triangles, lines, or points) that connect these samples. The purpose of the tessellator 412 is to divide a domain such as a line, triangle, or quad into smaller items to reflect more detail (*e.g*. small triangles). To be very clear, tessellator 412 does not transform the output patch from the hull shader 411. Rather, tessellator 412 uses tessellation factors to develop a tiled canonical domain (*e.g*. polygon) in a normalized (*e.g.* zero-to-one) coordinate system. For example, a quad domain (*e.g.* FIGs. 4a and 4b) may be tessellated to a unit square and a tri domain (*e.g*. FIGs. 4c and 4d) may be tessellated to a unit triangle. The tessellator portion 412 operates once per patch using tessellation factors (which specify how finely the domain is tessellated) and the type of partitioning (which specifies the algorithm used to divide a patch) that are passed in from the hull-shader portion 411. The tessellator portion 412 incrementally outputs a normalized vertex location on the patch (*e.g.* in barycentric coordinates) to the domain shader stage. Thus the output of the tessellator 412 does not reflect, for example, the surface contour or color of the input patch. Instead, it is the tessellation criteria that will ultimately be imposed on the input patch.

### Domain Shader

The domain shader 413 is a programmable shader stage that uses as its input output portions from both the tessellator 412 and the hull shader 411. Thus, domain shader 412 has access to both a low-order patch representing the appearance of the graphic (output of the hull shader 411), the patch data (output of the hull shader), and information regarding how that low-order patch should be tessellated (output of the tessellator 412). Having these inputs, the domain shader may produce, as output, vertex data for each surface sample on the patch produced by the tessellation stage, where the output vertex data closely represents the appearance of the underlying graphic (*e.g.,* data may include positions, texture coordinates, attributes, etc.). The domain shader 413 may be called for each vertex generated by the tessellator 412 and may generate the final vertex data for the tessellated primitives (*e.g*. triangles). For example, the domain shader may modify a vertex position by sampling a texture for displacement mapping to add additional detail to the rendered geometry.

### Geometry Shader

A geometry shader 414 is a 3D shader that may generate new graphics primitives based upon the input primitives to the pipeline. The geometry shader may be used, for example, in point sprite generation, geometry tessellation, and shadow volume extrusion.

### Rasterizer

Rasterizer portion 415 serves the purpose of converting vector graphics (*e.g*. mathematically described graphics) to fragments, which are often embodied as pixels. Thus, the rasterizer 415 generally accepts vertex data and outputs pixel information.

### Fragment Shader

Fragment shader 416 shades the fragments, for example, adding color and other visible attributes to each pixel prior to its use in a frame buffer and ultimately for display on a display device (not shown in FIG. 4e).

US 2016/0 155 209 A1 discloses a graphics processing unit (GPU) for determining whether to perform tessellation on a first model according to a control of a central processing unit (CPU). The GPU reads the first model from a memory, which stores prepared models having different complexities, calculates a complexity of the first model, compares the calculated complexity with a reference complexity, and determines whether to perform a tessellation operation on the first model according to a comparison result.

John Kloetzli: "D3D11 Software Tessellation". 21 March 2014 (2014-03-21). XP055415112, Retrieved from the Internet: URL:http://twvideo01.ubm-us.net/o1/vault/GDC2014/Presentations/Kloetzli John Advanced Visual Effects.pdf [retrieved an 2017-10-12] deals with software tessellation.

### SUMMARY

The invention provides a method upon a host device, a non-transitory program storage device and a system according to the independent claims. Further embodiments are provided in the dependent claims. The further examples called embodiments in the description are illustrative examples. Many
embodiments of the disclosure relate to the use of software with graphics processing units (GPUs), for creating graphics that benefit from tessellation. Some embodiments employ a graphics pipeline to produce one or more graphic frames, the graphics pipeline including a tessellator, a domain shader, a rasterizer portion and a fragment shader. Other embodiments may employ an alternative graphics pipeline, also to produce one or more graphic frames, the alternative pipeline including a tessellator, a post-tessellation vertex function, rasterizer and a fragment function. Furthermore some embodiments of the aforementioned pipelines are preceded by a compute kernel or a patch kernel as explained herein.

Tessellation according to DX11 employs at least a six or seven stage pipeline. Embodiments of the disclosure offer simplified and more flexible tessellation pipelines by eliminating early pipeline stages such as a vertex shader or a hull shader that are not always necessary, but consume resources whether or not they are necessary. In some embodiments of the disclosure, graphics pipelines are proposed that do not employ the vertex shader and hull shader. Instead, the functions of vertex shader and hull shader may be obviated by pre-supplied or otherwise supplied patches, patch data, and tessellation factors. In particular, patches, patch data, and tessellation factors may be supplied by the developer and stored in memory for retrieval at runtime. In addition, a compute kernel may be used to generate or retrieve any part of the necessary information that is not directly retrievable from memory.

In some embodiments of the disclosure, a scaling technique may be employed to derive new tessellation factors without traditional calculation of those factors. In particular, tessellation factors may be scaled according to the distance from the camera of the subject graphic - the closer the camera the higher the tessellation and vice versa.

### BRIEF DESCRIPTION OF THE DRAWINGS

FIG. 1 shows a representative computer node that may be used, for example, as an end-user machine or a developer machine.
FIG. 2 shows an illustrative network environment associated with various disclosed embodiments.
FIG. 3 shows an illustrative software layer and architecture diagram.
FIGs. 4a through 4d illustrative exemplary patches.
FIG. 4e illustrates processes associated with DX11.
FIG. 5 shows a second illustrative system and process architecture.
FIGs. 6a, 6b, and 7 shows processes related to embodiments of this disclosure.
FIGs. 8 and 9 show illustrative patch coordinates in a normalized parameter space.

### DETAILED DESCRIPTION

This disclosure pertains to systems, methods, and computer readable media to improve the operation of graphics development systems and graphics systems. It also pertains to a variety of architectures for design and/or operation of a graphics development system and the rendering of related graphics on an end-user device. In general, many embodiments of this disclosure envision the use of tessellation in the graphics pipeline as embodied by the teaching and suggestions herein.

In the following description, for purposes of explanation, numerous specific details are set forth in order to provide a thorough understanding of the disclosed concepts. As part of this description, some of this disclosure's drawings represent structures and devices in block diagram form in order to avoid obscuring the novel aspects of the disclosed concepts. In the interest of clarity, not all features of an actual implementation may be described. Moreover, the language used in this disclosure has been principally selected for readability and instructional purposes, and may not have been selected to emphasize the inventive subject matter, leaving resorting to the claims as a potential necessity to determine such inventive subject matter. Reference in this disclosure to "one embodiment" or to "an embodiment" or "embodiments" means that a particular feature, structure, or characteristic described in connection with the embodiment is included in at least one embodiment of the disclosed subject matter, and multiple references to "'one embodiment" or "an embodiment" should not be understood as necessarily all referring to the same embodiment. In addition, the use of the word "or" in this disclosure is intended to indicate an optional alternative (as in and/or) and not an exclusive alternative (as in or, but not both), unless the exclusivity is specifically noted. Furthermore, use of the word "include" and its various forms is intended to be illustrative of included items and is not intended that the included items are the only included matters.

It will be appreciated that in the development of any actual implementation (as in any software and/or hardware development project), numerous decisions must be made to achieve the developers' specific goals (*e.g*., compliance with system- and business-related constraints), and that these goals may vary from one implementation to another. It will also be appreciated that such development efforts might be complex and time-consuming, but would nonetheless be a routine undertaking for those having the benefit of this disclosure and being of ordinary skill in the design and implementation of user interface and response systems and/or gesture identification processing systems.

### Exemplary Hardware And Software

The embodiments described herein may have implication and use in and with respect to all types of devices, including single- and multi-processor computing systems and vertical devices (*e.g.*, cameras, gaming systems, appliances, *etc.*) that incorporate single- or multiprocessing computing systems. The discussion herein is made with reference to a common computing configuration that may be discussed as a software development system or an end-user system. This common computing configuration may have a CPU resource including one or more microprocessors (each having one or more processing cores) and a graphics resource including one or more GPUs (each having one or more processing cores). In many embodiments, the CPU(s) and GPU(s) work together to present graphic content on a display that may or may not be integral with a computing device that includes the processing resource and graphics resource. As discussed below, in many embodiments, the computing device may employ novel processes and hardware arrangements to improve graphics efficiency or performance by provision of improved tessellation.

This discussion is only for illustration regarding sample embodiments and is not intended to confine application of the disclosed subject matter to the disclosed hardware. Other systems having other known or common hardware configurations (now or in the future) are fully contemplated and expected. With that caveat a typical hardware and software operating environment is discussed below. The hardware configuration may be found, for example, in a server computer system, a workstation computer system, a laptop computer system, a tablet computer system, a desktop computer system, a gaming platform (whether or not portable), a television, an entertainment system, a smart phone, a phone, or any other computing device, whether mobile or stationary.

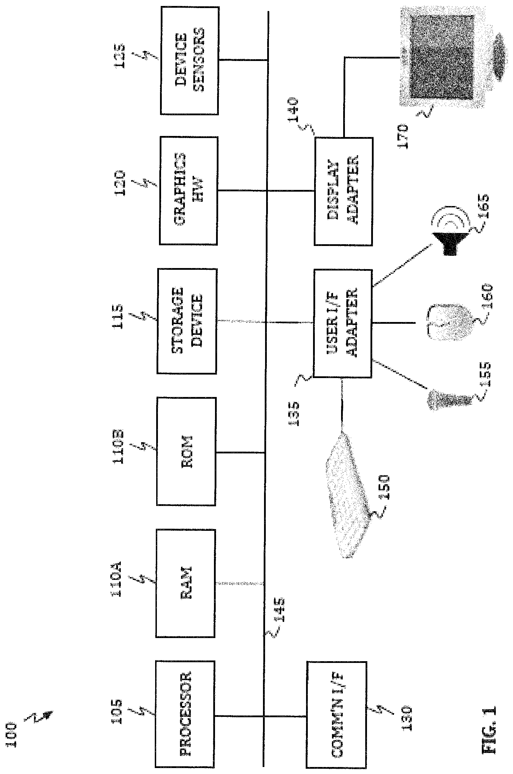

Referring to FIG. 1, the disclosed embodiments may be performed by representative computer system 100. For example the representative computer system may act as a software development platform or an end-user device. System 100 may be embodied in any type of device such as a general purpose computer system, a television, a set top box, a media player, a multi-media entertainment system, an image processing workstation, a hand-held device, or any device that may be coupled with or may incorporate display or presentation devices as discussed herein. Computer system 100 may include one or more processors 105, memory 110 (110A and 110B), one or more storage devices 115, and graphics hardware 120 that may include one or more GPUs. Computer system 100 may also have device sensors 125, which may include one or more of: depth sensors (such as a depth camera), 3D depth sensor(s), imaging devices (such as a fixed and/or video-capable image capture unit), RGB sensors, proximity sensors, ambient light sensors, accelerometers, gyroscopes, any type of still or video camera, LIDAR devices, SONAR devices, microphones, CCDs (or other image sensors), infrared sensors, thermometers, *etc.* These and other sensors may work in combination with one or more GPUs, digital signal processors (DSPs) or conventional microprocessors along with appropriate programming so the sensor outputs may be properly interpreted and/or combined and interpreted.

Returning to FIG. 1, system 100 may also include communication interface 130, user interface adapter 135, and display adapter 140 - all of which may be coupled via system bus or backplane 145. Memory 110 may include one or more different types of media (*e.g*., solid-state, DRAM, optical, magnetic, *etc.*) used by processor 105 or graphics hardware 120. For example, memory 110 may include memory cache, read-only memory (ROM), and/or random access memory (RAM). Storage 115 may include one or more non-transitory storage media including, for example, magnetic disks (fixed, floppy, and removable) and tape, optical media such as CD-ROMs and digital video disks (DVDs), and semiconductor memory devices such as Electrically Programmable Read-Only Memory (EPROM), and Electrically Erasable Programmable Read-Only Memory (EEPROM). Memory 110 and storage 115 maybe used to retain media (*e.g*., audio, image, and video files), preference information, device profile information, computer program instructions organized into one or more modules and written in any desired computer programming language, and any other suitable data. In some embodiments hereunder, memory 110 or storage 115 may be used to store graphics information such as shaders (types of programs), kernels (types of programs) vertex information, tessellation factors, control points, control point data and other data inputs and outputs of various graphics pipeline portions discussed herein.

When executed by processor 105 and/or graphics hardware 120, computer program code (*e.g*., shaders or kernels) may implement one or more of the methods or processes described herein. Communication interface 130 may include semiconductor-based circuits and be used to connect computer system 100 to one or more networks. Illustrative networks include, but are not limited to: a local network such as a USB network; a business's local area network; and a wide area network such as the Internet and may use any suitable technology (e.g., wired or wireless). Communications technologies that may be implemented include cell-based communications (*e.g.*, LTE, CDMA, GSM, HSDPA, *etc.*) or other communications (Ethernet, WiFi, Bluetooth®, USB, Thunderbolt®, Firewire®, *etc.*)*.* User interface adapter 135 may be used to connect keyboard 150, microphone 155, pointer device 160, speaker 165, and other user interface devices such as a touchpad and/or a touch screen (not shown). Display adapter 140 may be used to connect one or more display units 170.

Processor 105 may execute instructions necessary to carry out or control the operation of many functions performed by system 100 (*e.g*., evaluation, transformation, and compilation of graphics programs). Processor 105 may, for instance, drive display 170 and receive user input from user interface adapter 135 or any other user interfaces embodied by a system. User interface 135, for example, can take a variety of forms, such as a button, a keypad, a dial, a click wheel, a keyboard, a display screen, and/or a touch screen. Processor 105 may be any type of computing device such as one or more microprocessors working alone or in combination with one or more GPUs, DSPs, system-on-chip devices such as those found in some mobile devices. Processor 105 may include one or more dedicated GPUs or graphics subsystems that accept program instructions to create or alter display information such as mathematical models or pixels. In addition, processor 105 may be based on reduced instruction-set computer (RISC) or complex instruction-set computer (CISC) architectures or any other suitable architecture and may include one or more processing cores. Graphics hardware 120 may be special purpose computational hardware for processing graphics and/or assisting processor 105 in performing computational tasks. In some embodiments, graphics hardware 120 may include CPU-integrated graphics and/or one or more programmable GPUs, which may be operated in serial or parallel cooperation. Graphics hardware, such as GPUs may employ integrated memory, such as SRM, external memory such as memory 110 (that is either dedicated or shared), or a combination of both.

Output from the sensors 125 may be processed, at least in part, by processors 105 and/or graphics hardware 120, and/or a dedicated image processing unit incorporated within or without system 100. Information so captured may be stored in memory 110 and/or storage 115 and/or any storage accessible on an attached network. Memory 110 may include one or more different types of media used by processor 105, graphics hardware 120, and sensors 125 to perform device functions. Storage 115 may store data such as media (*e.g*., audio, image, and video files); metadata for media; computer program instructions; and other software; including database applications (*e.g*., a database storing avatar frames), preference information, device profile information, and any other suitable data. Memory 110 and storage 115 may be used to retain computer program instructions or code organized into one or more modules in either compiled form or written in any desired computer programming language. When executed by, for example, processor 105 or one or more GPUs in the system, such computer program code may implement one or more of the acts or functions described herein (*e.g*., compiling shader code, generating executable code, executing executable code, executing shaders, executing kernels, or executing a tessellator software module).

In addition to the foregoing, in some embodiments, graphics hardware 120 may further include a hardware tessellator to perform the tessellator functions described below.

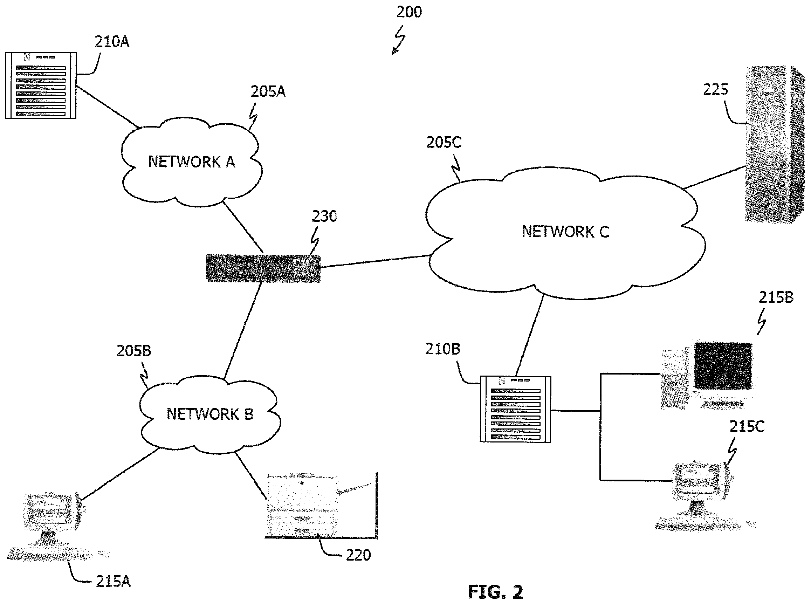

FIG. 2 depicts illustrative network architecture 200, within which the disclosed techniques may be implemented and the disclosed hardware may reside. This illustrative network 200 may include a plurality of networks 205, (*i.e.*, 205A, 205B, and 205C), each of which may take any form including, but not limited to, a local area network (LAN) or a wide area network (WAN), such as the Internet. Further, networks 205 may use any desired technology (wired, wireless, or a combination thereof) and protocol (*e.g*., transmission control protocol, TCP). Coupled to networks 205 are data server computers 210 (*i.e.* 210A and 210B) that are capable of operating server applications such as databases and also capable of communicating over networks 205. One embodiment using server computers may involve the operation of one or more central systems to process graphics information and distribute the processed information to nodes on a network. For example, pre-compiled or pre-computed shaders, kernels, tessellation data (such as factors), control points and any offline produced information may be downloaded through the network to a device as part of an application program or other program or as requested by an application program or other program.

Client computers 215 (*i.e.*, 215A, 215B, and 215C), which may take the form of any smartphone, gaming system, tablet computer system, desktop computer system, set top box, entertainment device/system, television, telephone, communications device, or intelligent machine, including embedded systems, may also be coupled to networks 205, and/or data server computers 210. In some embodiments, network architecture 210 may also include network printers such as printer 220 and storage systems such as 225, which may be used to store multi-media items or other data that are referenced herein. To facilitate communication between different network devices (*e.g*., data servers 210, end-user computers 215, network printer 220, and storage system 225), at least one gateway or router 230 may be optionally coupled there-between. Furthermore, in order to facilitate such communication, each device employing the network may comprise a network adapter circuit and related software. For example, if an Ethernet network is desired for communication, each participating device must have an Ethernet adapter or embedded Ethernet-capable ICs. Further, the devices may carry network adapters for any network in which they might participate (including, but not limited to, PANs, LANs, WANs, and cellular networks).

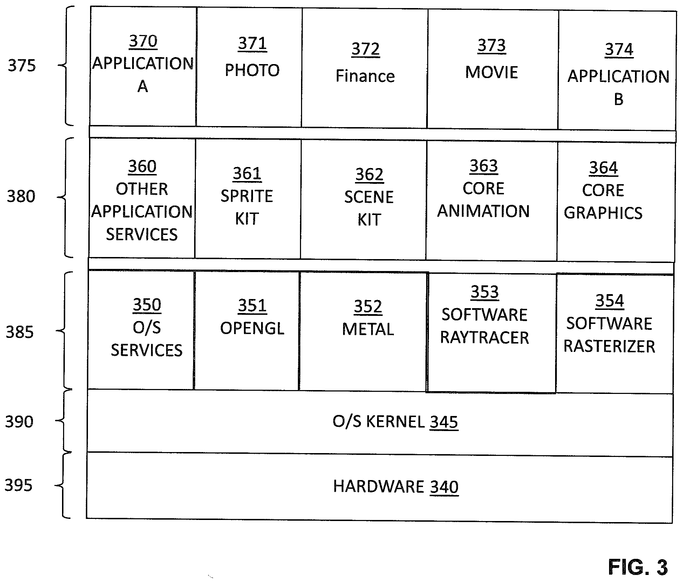

As noted above, embodiments of the inventions disclosed herein include software. As such, a description of common computing software architecture is provided as expressed in a layer diagram in FIG. 3. Like the hardware examples, the software architecture discussed here is not intended to be exclusive in any way, but rather to be illustrative. This is especially true for layer-type diagrams, which software developers tend to express in somewhat differing ways. In this case, the description begins with layers starting with the base hardware layer 395 illustrating hardware, which may include CPUs and GPUs or other processing and/or computer hardware. Above the hardware layer is the O/S kernel layer 390 showing an example as O/S kernel 345, which is kernel software that may perform memory management, device management, and system calls (often the purview of hardware drivers). In some embodiments of the disclosure, the vertex and hull shaders may be implemented as driver shaders in the kernel. This is because, as discussed below, many embodiments of the disclosure may be implemented in DX11 systems or hardware and the vertex and hull shaders are not necessary to many of the novel embodiments. The notation employed in the layer diagram of FIG. 3 is generally intended to imply that software elements shown in a layer use resources from the layers below and provide services to layers above. However, in practice, all components of a particular software element may not behave entirely in that manner.

Returning to FIG. 3, layer 385 is the O/S services layer exemplified by O/S services 350. O/S services may provide core O/S functions in a protected environment. In addition, O/S services shown in layer 385 may include frameworks for OpenGL 351, Metal 352, Software Raytracer 353, and a Pure Software Rasterizer 354. These particular examples all relate to graphics and/or graphics libraries and are chosen to illuminate the topic of many embodiments herein, which relate to graphics handling. These particular examples also represent graphics frameworks/libraries that may operate in the lower tier of frameworks, such that developers may use shading and graphics primitives and/or obtain fairly tightly coupled control over the graphics hardware. In addition, the particular examples named in FIG. 3 may also pass their work product on to hardware or hardware drivers in the lower layers.

Referring again to FIG. 3, OpenGL 351 represents an example of a well-known library and application-programming interface for graphics rendering including 2D and 3D graphics. Metal 352 also represents a published graphics library and framework, but it is lower level than OpenGL 351, supporting fine-grained, low-level control of the organization, processing, and submission of graphics and computation commands, as well as the management of associated data and resources for those commands. Metal also provides for control of compute kernels and shaders through a single API, which is a capability exploited as shown in some embodiments below where the graphics pipeline may include both compute kernels and shaders.

Software Raytracer 353 is software for creating image information based upon the process of tracing the path of light through pixels in the plane of an image. Pure Software Rasterizer 354 refers generally to software used to make graphics information such as pixels without specialized graphics hardware (*e.g*., using only the CPU). These libraries or frameworks shown within the O/S services layer 385 are only exemplary and intended to show the general level of the layer and how it relates to other software in a sample arrangement (*e.g*. kernel operations usually below and higher-level Applications Services 360 usually above). In addition, it may be useful to note that Metal 352 represents a published framework/library of Apple Inc. that is known to developers in the art. Furthermore, OpenGL 351 may represent a framework/library present in versions of software either currently or formerly distributed by Apple Inc.

Above the O/S services layer 385 there is an Application Services layer 380, which includes Sprite Kit 361, Scene Kit 362 Core Animation 363, and Core Graphics 364. The O/S services layer represents higher-level frameworks that are commonly directly accessed by application programs. In some embodiments of this disclosure the O/S services layer includes graphics-related frameworks that are high level in that they are agnostic to the underlying graphics libraries (such as those discussed with respect to layer 385). In such embodiments, these higher-level graphics frameworks are meant to provide developer access to graphics functionality in a more user/developer friendly way and allow developers to avoid work with shading and graphics primitives. By way of example, Sprite Kit 361 is a graphics rendering and animation infrastructure made available by Apple Inc. Sprite Kit 361 may be used to animate textured images or "sprites." Scene Kit 362 is a 3D-rendering framework from Apple Inc. that supports the import, manipulation, and rendering of 3D assets at a higher level than frameworks having similar capabilities, such as OpenGL. Core Animation 363 is a graphics rendering and animation infrastructure made available from Apple Inc. Core Animation 363 may be used to animate views and other visual elements of an application. Core Graphics 364 is a two-dimensional drawing engine from Apple Inc. Core Graphics 365 provides 2D rendering for applications.

Above the application services layer 380, there is the application layer 375, which may comprise any type of application program. By way of example, FIG. 3 shows three specific applications: Photo Application 371 (a photo management, editing, and sharing program), Finance Program 372 (a financial management program), and Movie Application 373 (a movie making and sharing program). Application layer 375 also shows two generic applications 370 and 374, which represent the presence of any other applications that may interact with or be part of the inventive embodiments disclosed herein. For example, game applications, communications applications, productivity applications, and utility applications are all common in contemporary computing. Generally, embodiments of the invention employ and/or interact with applications that produce displayable/viewable content. Regarding many embodiments of the disclosure, text editors and software development environments to create kernel or shader source code generally operate in the application layer, but may also have lower level components. Compilers and executable code generators may also operate in the application layer, but in some embodiment may operate as a service to Applications and therefore reside in a lower level either exclusively or in addition to presence in the application layer. Finally, regarding some embodiments of the disclosure, the implementation of the graphics pipeline discussed herein may exist primarily in layer 385 or straddle between two or three of the layers 380, 385 and 390. As noted below, some embodiments of the disclosure contemplate pipeline portions being implemented in hardware. For example, some embodiments use a tessellator implemented wholly or partially in hardware. Thus, in these embodiments, the graphics pipeline will extend into the hardware layer (*e.g.* 395) as a complement to the one or more of the three software layers represented by 390, 385 or 380.

In evaluating O/S services layer 385 and applications services layer 380, it may be useful to realize that different frameworks have higher- or lower-level application program interfaces, even if the frameworks are represented in the same layer of the FIG. 3 diagram. The illustration of FIG. 3 serves to provide a general guideline and to introduce exemplary frameworks that may be discussed later. Furthermore, some embodiments of the invention may imply that frameworks in layer 380 make use of the libraries represented in layer 385 or that software in layer 385 cooperates with drivers or other software in kernel 345. Thus, FIG. 3 provides intellectual reinforcement for these examples. Importantly, FIG. 3 is not intended to limit the types of frameworks or libraries that may be used in any particular way or in any particular embodiment.

### DirectX 11 - DX11 Tessellation

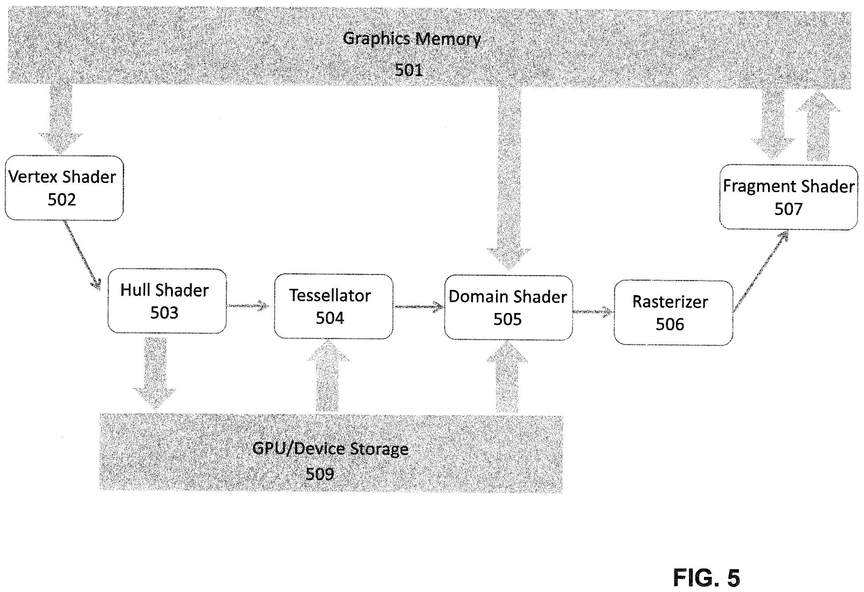

Referring to FIG. 5, there is shown the DX11 pipeline juxtaposed to memory resources to allow for a more in depth understanding of one operation in accordance with this disclosure. In particular, there is shown graphics memory 501, which can be any memory accessible to the graphics processing hardware in a system. In some embodiments, the memory will be RAM (*e.g.*, SRAM or DRAM) attached to a GPU or other processing device. The memory may be dedicated to graphics operations, dedicated to the GPU (or other device) or shared between devices (*e.g.*, memory shared between the GPU and CPU). For further illustrations regarding memory, reference is made to the discussions related to FIG. 1.

Referring again to FIG. 5, there is also shown GPU/device storage 509, which represents memory or storage more closely available to the processing device. Thus, GPU/device storage 509 may represent internal memory of a GPU or very closely coupled memory such as cache or SRAM (*e.g*., accessible through links or other interfaces that are high speed as compared to normal computing DRAM access). The process portions 502 through 507 are intended to represent the same or similar software/structures referred to in FIG. 4e. Thus, introductory information regarding vertex shader 502, hull shader 503, tessellator 504, domain shader 505, rasterizer 506, and fragment shader 507 may be found above.

Referring again to FIG. 5, the vertex shader retrieves graphics information from graphics memory 501, such as information relating to a patch, or information regarding a 3D point in a model. The vertex shader transforms the control points of a patch, which are then processed by hull shader 503. Hull shader 503 produces data regarding a transformed version of the patch and the desired level of tessellation (*e.g*. tessellation factors). This data is stored in GPU/device storage 509, and then some of it is retrieved by Tessellator 504. As discussed above, Tessellator 504 uses tessellation factors and partitioning (type) information to produce a tiled canonical domain in a normalized coordinate system. Domain shader 505 then reads from the GPU/device storage 509 certain information (discussed above) produced by both the hull shader 503 and the tessellator 504. Furthermore, as shown in FIG. 5, domain shader 505 may also read information from graphics memory 501. For example, domain shader 501 may read from textures or buffers for any purpose, including to calculate a displacement (or position offset) using a combination of the control point data and normalized coordinates. The domain shader 505 produces final vertex data for the tessellated primitive (*e.g*. triangle) and that data is rasterized by unit 506 before being passed to the fragment shader(s) 507 for per-pixel operations.

### Pipeline Embodiments For Tessellation

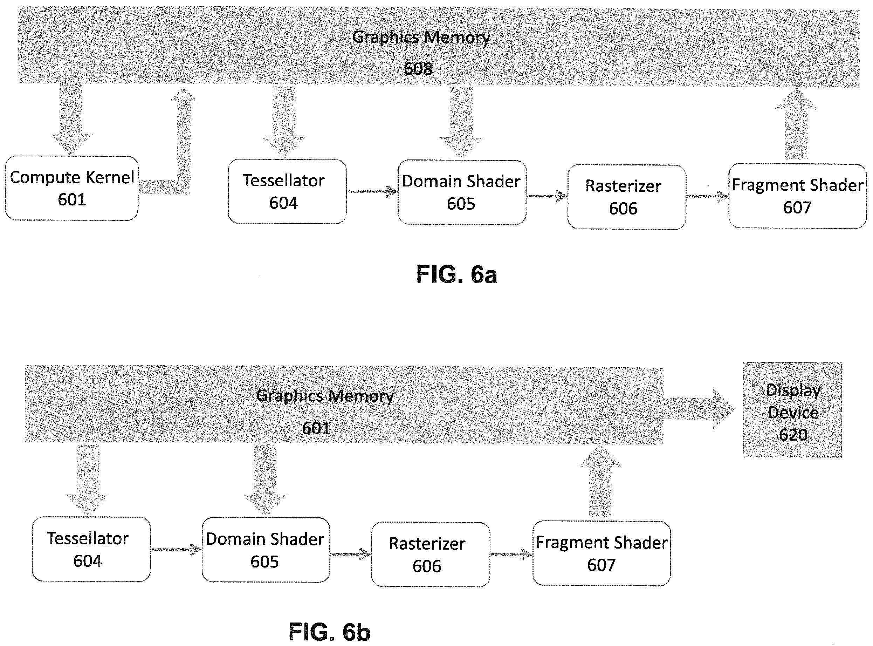

Referring to FIG. 6a, there is shown a pipeline juxtaposed to memory where the arrangement is according to many embodiments of the disclosure. Compute kernel 601 is shown with bi-directional connectivity to graphics memory 501. In some embodiments, compute kernel 601 may be used to read an input patch or other information describing a graphic and: (i) generate as output, per-patch data such as tessellation factors (*e.g*. the inside and edge patch tessellation factors) and any user-specified per patch data; and, (ii) in some embodiments, generate or modify patch control point data (*e.g.*, the output patch, such as control points and related information). As indicated in FIG. 6a, outputs from compute kernel 601, such as per-patch data and control point information, may be written to the graphics memory 608 for further use in the pipeline. In many embodiments, compute kernel 601 is a developer-accessible program so its use and function are within the control of the application (or other software) developer. Thus, the compute kernel 601 may be employed or not on conditions set by the developer. For example, compute kernel 601 may compute tessellations factors for some frames or patches and not for others. Furthermore, the conditions for determining whether tessellation factors are computed for a frame or patch may be programmatically set by the developer and determined by the system, either in the CPU, or in compute kernel 601 (or otherwise in the GPU). Since the compute kernel (either alone or in conjunction with another processing resource) may perform operations completely conditionally, the graphics pipeline becomes very flexible. For example, as the camera approaches an item in a visible graphic, the compute kernel 601 may be used to increase tessellation by simply scaling prior tessellation factors of the same item. This type of technique is much more efficient and less computationally expensive that re-computing new tessellation factors for the same item. In some embodiments, this approach may be implemented by providing tessellation factors for one or more patches or frames and additionally providing scaling factors associated with a variety of camera positions (*e.g*. distance) relative to the patches or frames for which the tessellation factors are provided.

In embodiments or pipeline instances without compute kernel 601, one or more shaders or compute kernels may be used to generate the patch data or tessellation factors. In yet other embodiments, the patch data or tessellation factors may be generated offline and simply read from memory obviating the need (at least partially) for the use of compute kernel 601. For example, tessellation factors may be provided for all patches or frames and simply accessed from memory 608. Alternatively, tessellation factors may be for one or more patches or frames and additionally scaling factors associated with a variety of camera positions (*e.g*. distance) relative to those patches or frames may also be provided. Some embodiments simply use the CPU or a compute kernel to determine tessellation factors for every frame by using the provided factors along with an appropriate scaling factor. Importantly, the use of the term scaling factor is not intended to limit the use to simple mathematics. Differing embodiments may embody scaling factors as simple multipliers or complex functions. For example, a scaling factor may be an integer, a mathematical function or even a programmatic sequence that includes both functions and conditions so that the scaling effects may depend upon various factors including system events (*e.g*., application state, or screen or graphics settings).

Referring again to FIG. 6a, Tessellator 604 may read the tessellation factors or patch factors and any other required information (*e.g*. partitioning type) from graphics memory 608 and produce and output a canonical domain to pass to the domain shader 605. The domain shader can use the canonical domain along with other information regarding the original graphic patch (*e.g.* control points and related data) that may be read from the graphics memory 608. Notably, according to many inventive embodiments hereunder, vertex information retrieved from memory 608 may be as-supplied by the developer or the compute kernel 601. In other words, domain shader 605 may use vertex information such as control points that have not been otherwise processed online by another vertex shader.

The domain shader 605 produces vertex information that may be transformed into fragments or pixels by rasterizer 606. Notably, in some embodiments, domain shader 605 is the only vertex shader in the pipeline or in the tessellation portion of the pipeline, which is a significant efficiency as compared to the DX11 pipeline. After rasterization, the fragment shader may color or otherwise shade the fragments or pixels and store the result back in the graphics memory 608. In some embodiments, after shading, fragments or pixels are stored in a buffer such as a frame buffer and the fragments or pixels may be organized as frames for display on a target display device 620.

The arrows shown in FIG. 6a are intended to illustrate an embodiment where certain shaders are bound so that information may be passed directly between them. For example, FIG. 6a indicates that tessellator 604 passes output data to domain shader 605, which passes output data to rasterizer portion 606, which in turn passes output data to fragment shader 607. The embodiments herein further contemplate that information may also be shared through the graphics memory 608, which may be more or less efficient in differing situations. Furthermore, the discussion herein discusses the processing of patches or frames, when in reality, the information may pass between segments more incrementally (*e.g*. one vertex or primitive at-a-time).

With reference to FIG. 6b, there is shown a diagram similar to FIG. 6a, however with the compute kernel 601 removed. FIG. 6b illustrates the concept that some embodiments of the disclosure contemplate the pipeline as including tessellator 604, domain shader 605, rasterizer 606 and fragment shader 607, without the use or need of compute kernel 601. This illustration reflects that the pipeline shown in FIG. 6b is agnostic to the source of patch information and tessellation factors. As indicated above, these input items may come from any source including other GPU operations (*e.g*., shaders or kernels), network sources, or from offline generation.

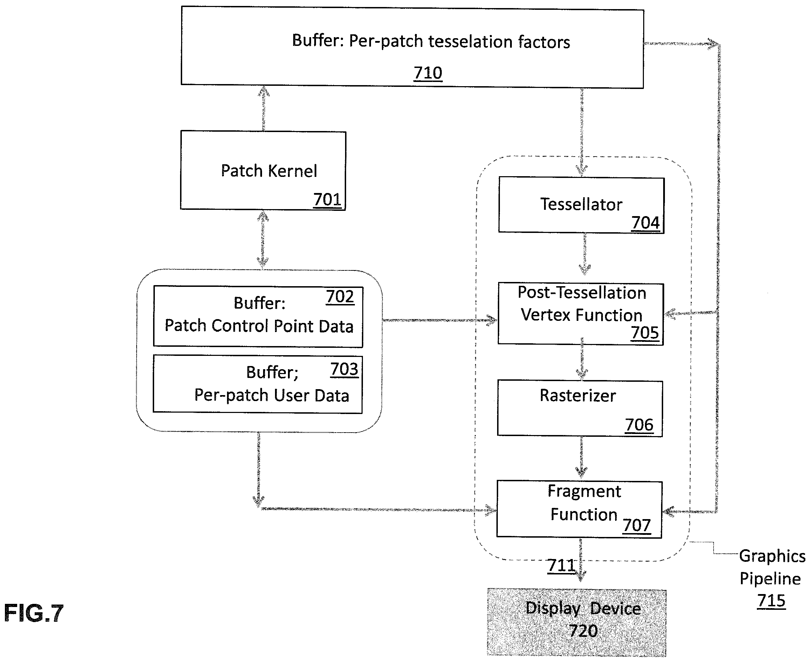

With reference to FIG. 7, there is shown an alternative illustration of a tessellation process to help illuminate several embodiments of this disclosure. Concepts regarding FIG. 7 as well as much of the remainder of the specification may be based upon examples of implementation in Apple's Metal framework paradigm. At a high level, FIG. 7 shows graphics pipeline 715 operating in cooperation with patch kernel 701 and buffer memory components 702, 703 and 710. For illustrative purposes, the buffer memory components 702, 703 and 710 are shown separately according to the data being stored. However, various embodiments of the disclosure contemplate the use of a single buffer in a computer system's main memory (*e.g*., DRAM or other memory types shared between graphics and other systems), graphics memory (*e.g*. DRAM or other memory either dedicated or reserved for graphics storage), or higher speed memory available to the graphics processing resource (*e.g*., SRAM in the GPU or tightly coupled to the GPU, or registers). In at least one embodiment buffers 702, 703 and 710 refer to space in a memory resource that is available for graphics processing and either dedicated or reserved for graphics processing or shared with other computer system memory users, such as the CPU.

As suggested by FIG. 7, patch kernel 701 may produce tessellation factors or patch data to be used in pipeline 715. In this respect, patch kernel 701 performs computations analogous to the vertex shader and the hull shader of a DX11 implementation. However, unlike the DX11 implementations, many embodiments of the disclosure do not require that the patch kernel 701 must execute for every graphic frame. As discussed above, developers may choose any system or mechanism known now or in the future to acquire or generate patch tessellation factors or patch data. For example other processing resources may be employed (*e.g*., CPU, GPU shaders or dedicated hardware), or acquisition or generation may be performed offline, with factors and patch data simply stored in local memory or acquired over a network (*e.g*., in real time). Furthermore, as discussed above with respect to compute kernel 601, both the use and operation of patch kernel 701 may be conditioned on any number of factors. Moreover, as discussed above, scaling techniques may be employed to reduce the number of instances for which tessellation factors must be calculated.

Referring again to FIG. 7, in some embodiments, the patch kernel 701 may be a compute kernel that: (i) computes per-patch data such as the inside and edge patch tessellation factors and any user-specified per-patch data; and/or (ii) optionally, generates or modifies patch control point data. The patch kernel 701 may source its inputs (*e.g*., as discussed above with respect to compute kernel 601) from accessible memory. Furthermore, patch kernel 701 outputs may also be stored in memory that is available to the graphics processing resource. For example, as shown in FIG. 7, patch kernel 701 stores patch tessellation factors in buffer 710, per-patch data in buffer 703 and patch control point data in buffer 702. In at least one embodiment, patch kernel 701 may store its outputs in a memory resource that is available to some or all of the elements of graphics pipeline 715. Furthermore, since the patch kernel 701 is not required to run for every graphic frame, some embodiments of FIG. 7 contemplate intermittently or periodically using patch Kernel 701 in the process on an as-needed basis. For example, patch kernel 701 may not be needed for a graphics frame when tessellation factors or other patch data are available from memory or over a network (*e.g*., from offline acquisition or generation). Furthermore, patch kernel 701 may also not be needed if tessellation is unnecessary for a particular frame or patch. Other embodiments contemplate removing patch kernel 701 where the tessellation factors or other patch data are known to be alternatively assessable from memory, a network or another processing resource, such as a CPU.

Referring again to FIG. 7, in some embodiments, tessellator 704 is an initial stage in graphics pipeline 715. In some embodiments, the tessellator 704 may embody the structure and functionality of any of the tessellators discussed above (*e.g*. with respect to DX11 or FIGs. 6a and 6b). In at least one embodiment, tessellator 704 is a fixed-function (*e.g*. not programmable) tessellation stage of the pipeline as embodied in a DX11 graphics tessellation pipeline. The use of a DX11 embodiment allows a user to implement embodiments of the disclosed subject matter on hardware and systems designed for DX11. For example, in one embodiment, an implementation of the inventive concepts may be imposed on DX11 hardware by employing the DX11 vertex and hull shaders as driver-generated pass through shaders. For example, the DX11 vertex shader may optionally read patch-control-point data (using *e.g*., PTVS VertexDescriptor) and pass it down to the hull shader (although this may be hardware dependent). The DX11 vertex shader might also do nothing and leave the action of attribute fetching to a PTVS. In some embodiments, the DX11 hull shader reads the tessellation factors and optionally passes down the read and pass them down. In addition, the hull shader may pass down the patch-data. In one or more embodiments, the DX11 domain shader is unaltered, but differs from a DX11 implementation because at least some of the input data is acquired differently. For example patch-control-points and patch-data are fed in from the vertex/hull shaders or read directly from memory in the PTVS).

In some embodiments, tessellator 704 takes as input one or more of: (i) the number of patches to be processed: (ii) for each patch to be processed, the patch type (*e.g.* quad or triangle), or if all patches are the same type, then simply the patch type; (iii) a selected output primitive type (*e.g*., triangles) for each patch or for all patches if the selected output primitive type is the same; (iv), a buffer (*e.g*. an address or pointer) that stores the per-patch tessellation factors for each patch to be tessellated, or if the factors are the same for all the patches, a single buffer; and (v) the output primitive orientation (*e.g*. if the output primitive is a triangle). As discussed above, the tessellator 704 may produce a canonical domain as an output, which in some embodiments is bound to the post-tessellation vertex function 705 as an input.

Referring again to FIG. 7, in some embodiments, post-tessellation vertex function 705 may receive the output from tessellator 704 and calculate the vertex data for each surface sample produced by the tessellation stage. In particular, the tessellator's canonical domain output provides samples to be used by post-tessellation vertex function 705 in connection with other data regarding the patch being processed to produce vertex data that contemplates both the appearance of the graphic and the selected tessellation for its reproduction in the graphics system. In many embodiments, this is analogous to the activity of the domain shader 605 discussed above. In some embodiments, the samples may be represented by the normalized patch coordinate on the patch being processed. In at least one embodiment, inputs to the post-tessellation vertex function 705 include one or more of: (i) some or all of the patch kernel 701 output, for example per-patch data that may be read directly from buffer 703, and patch control point data that may be read directly from buffer 702; and (ii) the output of tessellator 704 (*e.g.*, the normalized vertex location on the patch).

In one or more embodiments, the post-tessellation vertex function 705 generates the final vertex data for the tessellated triangles. For example, to add additional detail (such as displacement mapping values) to the rendered geometry, the post-tessellation vertex function may sample a texture to modify the vertex position by a displacement value. In some embodiments, the post-tessellation vertex function 705 serves as the last or only vertex shader in the pipeline or in the tessellation portion of the pipeline. After processing by the post-tessellation vertex function 705, the post processed vertices represent the appearance of the graphic to be embodied in a frame or other visible embodiment of the graphic (*e.g*. produced at or after 711, post shading and ultimately sent to display device 720 for display).

Referring again to FIG. 7, after the post-tessellation vertex function 705 has executed to produce final vertex data, the tessellated primitives are rasterized at rasterizer 706. As discussed above, rasterization (*e.g*. 706) transforms mathematical graphics representation into fragments or pixels for display. The fragments or pixels may then be altered through one or more shading processes represented by Fragment function 707. The shaded pixels or fragments may be further modified by other shaders or sent to a graphics buffer such as a frame buffer, where they can be organized as frames for display on a display device.

### Tessellator primitive generation

As suggested above, in one or more embodiments, tessellator 704 consumes input patch information and produces a new set of, for example, triangles reflecting the desired degree of tessellation. In some embodiments, these triangles are produced by subdividing the patch (quad or triangle) according to the per-patch tessellation factors discussed below. This subdivision may be performed in an implementation-dependent manner. For example, for triangle patches, the tessellator 704 may subdivide a triangle primitive into smaller triangles; and for quad patches, the primitive generator may subdivide a rectangle primitive into smaller triangles. In at least one embodiment, each vertex produced by the tessellator 704 may be expressed in barycentric coordinates and associated (u, v, w) or (u, v) coordinates in a normalized parameter space, with parameter values in the range [0, 1].

### Quad patches

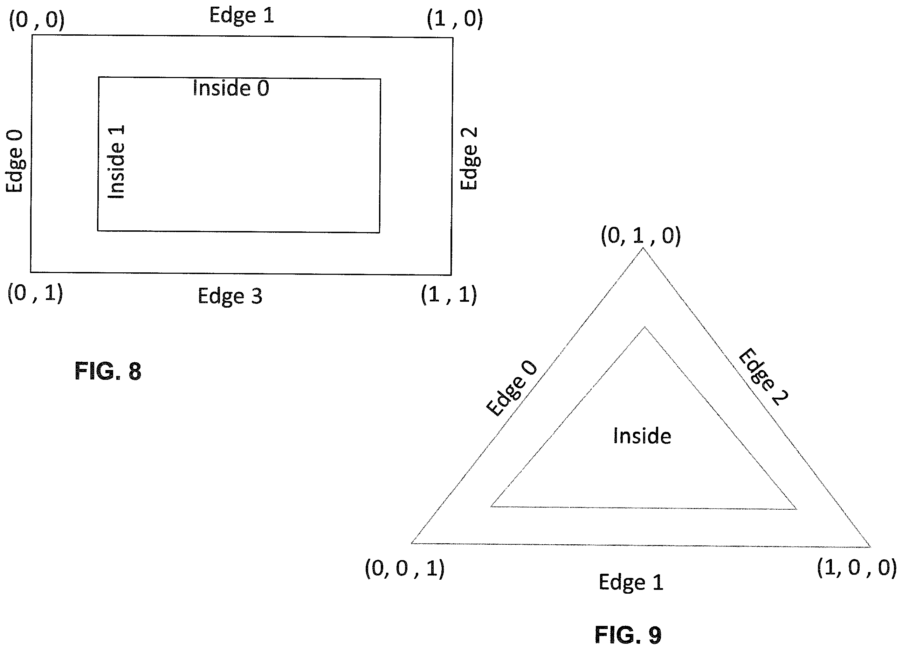

In some programmed embodiments of the disclosure, per-patch tessellation factors may be declared for example as structs. With reference to FIG. 8, there are shown quad coordinates in normalized space representing tessellation factors for quad type patches. With respect to quads, one or more embodiments expresses position as a (u, v) coordinate that indicates the relative horizontal and vertical position of the vertex, relative to the subdivided rectangle. The (u, v, w) values may range from 0.0 to 1.0 each and may be generated by the tessellator (*e.g*. 704) using 16-bit fractions with fixed-point arithmetic, which may then be converted to single precision floating-point values before they are passed as inputs to a post-tessellation vertex shader (*e.g.* 704).

With reference to FIG. 8, the following illustrative instructions and APIs are offered as samples that may be employed in one or more programmatic embodiments:

```
 struct MTLQuadTessellationFactors {
 half edgeTessellationFactor[4];
 half insideTessellationFactor[2];
 };
```

Regarding FIG. 8, the inside tessellation factors (*e.g*., Inside 1 and Inside 0) are in the xy components of insideTessellationFactor. Regarding edgeTessellationFactor: the value in index 0 provides the tessellation factor for the u == 0 edge of the patch; the value in index 1 provides the tessellation factor for the v == 0 edge of the patch; the value in index 2 provides the tessellation factor for the u == 1 edge of the patch; and, the value in index 3 provides the tessellation factor for the v == 1 edge of the patch. The ordering of the edges may be clockwise, starting from the u == 0 edge, which is the left side of the patch, and ending at the v == 1, which is the top of the patch.

### Triangle patches

As stated above, in some programmed embodiments of the disclosure, per-patch tessellation factors may be declared for example as structs. With reference to FIG. 9, there are shown triangle coordinates in normalized space representing tessellation factors for triangle type patches. With respect to triangles, one or more embodiments expresses the vertex position as a barycentric coordinate (u, v, w), where u + v + w = 1. As such, the relative influence of the three vertices of the triangle on the position of the vertex is indicated.

With reference to FIG. 9, the following sample instructions and APIs are offered as samples that may be employed in one or more programmatic embodiments:

```
struct MTLTriangleTessellationFactors {
             half edgeTessellationFactor[3];
             half insideTessellationFactor;
             };
```

Regarding edgeTessellationFactor: the value in index 0 provides the tessellation factor for the u == 0 edge of the patch; the value in index 1 provides the tessellation factor for the v == 0 edge of the patch; and the value in index 2 provides the tessellation factor for the w == 0 edge of the patch.

### Discarding Patches

Some embodiments of the disclosure contemplate discarding certain patches. For example, with reference to FIGs. 8 and 9, if any relevant edge tessellation factor is less than or equal to zero (*e.g*., corresponding to a floating-point NaN value), the patch may be discarded. In one embodiment, the tessellator (*e.g*. 704) makes the determination or discards the patch. In certain embodiments, when a patch is discarded: no new primitives are generated for the patch; the post-tessellation vertex function does not run for the patch; and no visible output is produced for the patch. Note that a negative inside tessellation factor may be clamped, so in some embodiments it does not cause a patch to be discarded. Furthermore, the manner in which a negative inside tessellation factor is clamped, depends upon the tessellationPartitionMode in select programmatic embodiments.

In one programmatic embodiment, if the tessellation factor scale is enabled (*e.g*. tessellationFactorScaleEnabled in MTLRenderPipelineDescriptor), then the tessellator (*e.g*. 704) first multiplies the relevant edge and inside tessellation factors of the patch by the specified scale factor. In one embodiment, for quad patches, all four edge tessellation factors are relevant. In another embodiment, for triangle patches, only the first three edge tessellation factors are relevant.

### Implementation Upon Prior Systems

One or more of the embodiments described herein may be conceived as altered versions of graphics development environments and frameworks that are currently commonly known. For example, many embodiments of this disclosure may relate to the Apple Metal programming environment and operation. Furthermore, many embodiments of the disclosure are particularly intended for implementation on hardware and systems suited for DX11. The following further description of embodiments and implementation details are intended to illustrate concepts often through the recitation of implementation examples and code examples. No limitation to the details shown is intended. The examples illustrate concepts regarding implementation, such as APIs and are also illustrative of the concepts discussed above.

### APIs

As indicated above, this disclosure contemplates the use of a program interface for developers to manipulate the use of the tessellation pipeline embodiments taught and suggested herein. For example, tessellation properties may be manipulated by the developer using an application interface. In some embodiments associated with Apple's Metal programming paradigm, the interface may be associated with MTLRenderPipelineDescriptor. APIs may be provided to the developer to indicate or control one or more of the following:
(i) Maximum tessellation factor to be used by the tessellator (*e.g*., 704) when tessellating a patch (*e.g.*, max 64 and default 16);
(ii) Indicate whether the tessellation factor is scaled or not, where in some embodiments, the scale factor is applied and the patch is culled and before the tessellation factors are clamped.
(iii) Specify a step function used to determine the tessellation factors for a patch from a tessellation factor buffer;
(iv) Specify the winding order of triangles output by the tessellator;
(v) Specify the partitioning mode used by the tessellator to derive the number and spacing of segments used to subdivide a corresponding edge;
(vi) Specify patch type or any other information about a patch such as per-path data and control points;
(vii) Specify any tessellation factor that may be desirable for tessellating any patch or any particular patch;
(viii) Specify tessellation-related functions;
(ix) Specify post-tessellation vertex function inputs;
(x) Specify variables related to the tessellation pipeline process;
(xi) Inquire regarding results or location of results or partial results;
(xii) Make testing inquiries into the operation of the tessellation pipeline; and
(xiii) Provide inputs for the fragment shading post tessellation operation.

### Specific API implementation examples

In some embodiments associated with Apple's Metal programming paradigm, specific implementation examples may be as follows:
The post-tessellation vertex function may be specified as vertexFunction in MTLRenderPipelineDescriptor.

MTLRenderPipelineDescriptor Properties for Tessellation The following new properties are added to MTLRenderPipelineDescriptor. Note, however, in some examples, if the vertex function is not a post-tessellation vertex function, all the following tessellation properties are ignored.

NSUInteger maxTessellationFactor specifies the maximum tessellation factor to be used by the tessellator when tessellating a patch (or patches).

The maximum tessellation factor is 64. The default is 16.

The maximum tessellation factor must be a power of 2 if tessellationPartitionMode is MTLTessellationPartitionModePow2.

The maximum tessellation factor must be an even number if tessellationPartitionMode is MTLTessellationPartitionModeFractionalOdd or MTLTessellationPartitionModeFractionalEven.

BOOL tessellationFactorScaleEnabled indicates if the tessellation factor is scaled or not. If the scale is enabled, the scale factor is applied to the tessellation factors after the patch cull check is performed and the patch is not culled and before the tessellation factors are clamped to the maxTessellationFactor. The default is NO.

MTLTessellationFactorFormat tessellationFactorFormat describes the format of the tessellation factors specified in the tessellation factor buffer.

```
 tessellationFactorFormat must be one of the following values:
 typedef enum : NSUInteger {
  MTLTessellationFactorFormatHalf = 0,
       } MTLTessellationFactorFormat;
```

MTLTessellationControlPointIndexType tessellationControlPointIndexType describes the size of the control-point indices specified by the controlPointIndexBuffer in the drawIndexedPatches API.

```
 tessellationControlPointIndexType must be one of the following values:
 typedef enum : NSUInteger {
       MTLTessellationControlPointIndexTypeNone=0,
       MTLTessellationControlPointIndexTypeUInt16 = 1,
       MTLTessellationControlPointIndexTypeUInt32 = 2,
       } MTLTessellationControlPointIndexType;
```

For the drawIndexedPatches API, tessellationControlPointIndexType must be either tessellationControlPointIndexTypeUInt16 or tessellationControlPointIndexTypeUInt32. For the drawPatches API, tessellationControlPointIndexType must be tessellationControIPointIndexTypeNone.

MTLTessellationFactorStepFunction tessellationFactorStepFunction specifies the step function used to determine the tessellation factors for a patch from the tessellation factor buffer. The default value is MTLTessellationFactorStepFunctionConstant.

MTLWinding tessellationOutputWindingOrder specifies the winding order of triangles output by the tessellator. The default value is MTLWindingClockwise.

MTLTessellationPartitionMode tessellationPartitionMode specifies the partitioning mode used by the tessellator to derive the number and spacing of segments used to subdivide a corresponding edge. tessellationPartitionMode is one of the following values:

```
 typedef enum : NSUInteger {
  MTLTessellationPartitionModePow2 = 0,
  MTLTessellationPartitionModeInteger = 1,
  MTLTessellationPartitionModeFractionalOdd = 2,
  MTLTessellationPartitionModeFractionalEven = 3,
  } MTLTessellationPartitionMode;
```

The default value is MTLTessellationPartitionModePow2. (In the descriptions below, *max* is the maxTessellationFactor specified in the MTLRenderPipelineDescriptor.)
The following describes the tessellation factor range for the supported tessellation partitioning modes:
MTLTessellationPartitionModePow2, range = [1, max];
MTLTessellationPartitionModeInteger, range = [1, max-1]; and
MTLTessellationPartitionModeFractionalEven, range = [2,max].
If tessellationPartitionMode is MTLTessellationPartitionModePow2, the floating-point tessellation level is first clamped to the range [1, *max*]. The result is rounded up to the nearest integer m, where m is a power of 2, and the corresponding edge is divided into m segments of equal length in (u, v) space.

If tessellationPartitionMode is MTLTessellationPartitionModeInteger, the floating-point tessellation level is first clamped to the range [1, *max*]. The result is rounded up to the nearest integer n, and the corresponding edge is divided into *n* segments of equal length in (u, v) space.

If tessellationPartitionMode is MTLTessellationPartitionModeFractionalEven, the tessellation level is first clamped to the range [2, *max*] and then rounded up to the nearest even integer n. If tessellationPartitionMode is MTLTessellationPartitionModeFractionalOdd, the tessellation level is clamped to the range [1, *max* - 1] and then rounded up to the nearest odd integer *n*. If *n* is 1, the edge is not subdivided. Otherwise, the corresponding edge is divided into *n* - 2 segments of equal length, and two additional segments of equal length that are typically shorter than the other segments. The length of the two additional segments relative to the others decrease monotonically by the value of *n - f*, where *f* is the clamped floating-point tessellation level. If *n - f* is zero, the additional segments have equal length to the other segments. As *n* - *f* approaches 2.0, the relative length of the additional segments approaches zero. The two additional segments should be placed symmetrically on opposite sides of the subdivided edge. The relative location of these two segments is undefined, but must be identical for any pair of subdivided edges with identical values of *f*.

### Specifying Tessellation Factors

The following MTLRenderCommandEncoder API specifies the per-patch tessellation factors:

```
 -(void)setTessellationFactorBuffer: (id<MTLBuffer>_Nullable)buffer
             offset: (NSUInteger)offset
         instanceStride: (NSUInteger)instanceStride
```

The following MTLRenderCommandEncoder API specifies the per-patch tessellation scale factor:
-(void)setTessellationFactorScale: (float)scale
With respect to specifying tessellation factors, in some embodiments, offset must be in a multiple of 4 bytes, and scale may be converted to a half-precision floating-point value before it is multiplied by the tessellation factors. In many embodiments, scale must be a positive normal half-precision floating-point value; i.e., is neither <= zero, denormal, infinite, nor NaN.

In many embodiments, for quad patches, the tessellation factor stride is 12 bytes and, for triangle patches, the tessellation factor stride is 8 bytes.

### MTLTessellationFactorStepFunction

The MTLTessellationFactorStepFunction is defined as:

```
 typedef NS_ENUM(NSUInteger, MTLTessellationFactorStepFunction)
 {
  MTLTessellationFactorStepFunctionConstant = 0
  MTLTessellationFactorStepFunctionPerPatch = 1
  MTLTessellationFactorStepFunctionPerInstance = 2
  MTLTessellationFactorStepFunctionPerPatchAndPerInstance = 3
  }
```

If the step function is MTLTessellationFactorStepFunctionPerInstance and MTLTessellationFactorStepFunctionPerPatchAndPerInstance, instanceStride must be a value > 0. Otherwise instanceStride must be 0.

If stepFunction is MTLTessellationFactorStepFunctionConstant, for all instances, the tessellation factor for all patches in drawPatches is at location offset in the tessellation factor buffer.

If stepFunction is MTLTessellationFactorStepFunctionPerPatch, for all instances, the tessellation factor for a patch in drawPatches is at location offset + (drawPatchIndex ^{∗} tessellation factor stride) in the tessellation factor buffer.

If stepFunction is MTLTessellationFactorStepFunctionPerInstance, for a given instance ID, the tessellation factor for all patches in drawPatches is at location offset + (instance ID ^{∗} instanceStride) in the tessellation factor buffer.

If stepFunction is MTLTessellationFactorStepFunctionPerPatchAndPerInstance, for a given instance ID, the tessellation factor for a patch in drawPatches is at location offset + (drawPatchIndex ^{∗} tessellation factor stride + instance ID ^{∗} instanceStride) in the tessellation factor buffer. (patchCount is either a direct or indirect argument to drawPatches.

### Specifying patch control-point and per-patch data

The post-tessellation vertex function can read the patch control-point and any user per-patch data by either: indexing into one or more buffers that are passed as arguments to the post-tessellation vertex function using the patch ID; or accessing values that are directly passed in as an argument to the post-tessellation vertex function declared with the [[stage_in]] qualifier.

When directly passed in as argument declared with the [[stage_in]] qualifier, the patch control-point data and per-patch data are declared as elements in a user-defined struct. The patch control-point data must be declared as a patch_control_point<T> templated type, where T is a user-defined struct that describes the patch control-point data. All other elements declared in this struct describe the per-patch data. Passing patch data using the [[stage_in]] qualifier allows developers to decouple the actual storage format of the patch data from the types declared in the post-tessellation vertex function (similar to support for per-vertex data inputs to a regular vertex function).

All per-patch inputs to the post-tessellation vertex function declared with the [[stage_in]] qualifier must specify an attribute location using [[attribute(index)]]. The index value is an unsigned integer value that identifies the patch input data location that is being assigned. The MTLVertexDescriptor object is used to configure how the patch data stored in memory is mapped to patch data declared in a shader.

In some examples, the following new enums are added to MTLVertexStepFunction:
MTLVertexStepFunctionPerPatch
MTLVertexStepFunctionPerPatchControlPoint
If step function is MTLVertexStepFunctionPerPatch, the shader fetches data based on the patch index of the patch.

If step function is MTLVertexStepFunctionPerPatchControlPoint, the shader fetches data based on the control-point indices associated with the patch.

The patch control-point data layout is described in MTLVertexDescriptor with an MTLVertexStepFunctionPerPatchControlPoint step function. The per-patch data layout is described in MTLVertexDescriptor with an MTLVertexStepFunctionPerPatch step function.

The MTLVertexStepFunctionConstant and MTLVertexStepFunctionPerInstance step functions can also be used to describe per-patch or control-point data. However, the
MTLVertexStepFunctionPerVertex step function cannot be used to describe patch control-point and per-patch data.

### Specifying per-thread compute kernel data

An app developer typically uses an MTLVertexDescriptor-like structure to describe the inputs to the DirectX / OpenGL vertex shader. MTLStageInputOutputDescriptor is introduced in MTLFeatureSet_OSX_GPUFamily1_v2 to enable using a descriptor similar to MTLVertexDescriptor to specify the actual format of the per-thread data (such as control-point or per-patch data) for a compute kernel at runtime. Although intended to support compute kernel generation of tessellation factors, this generic API approach to provide [[stage_in]] data (i.e., per-thread data) can be used for a number of use cases. The API changes are:
(A) MTLStageInputOutputDescriptor is added that is similar to MTLVertexDescriptor with the following differences:
- The format enum names use a prefix of MTLAttributeFormat¹, not MTLVertexFormat, because this refers to kernel data, which is not necessarily a vertex.
   ¹ MTLVertexFormat enums are typedefed to the corresponding MTLAttributeFormat enums.
- The step function enums are:
   MTLStepFunctionConstant 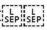
   Value directly used to fetch data. 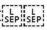
   MTLStepFunctionThreadPositionInGridX
      Use the x coordinate of the thread position in a grid as the index to fetch [[stage_in]] data or as an index into the [[stage_in]] index buffer, which is then used to fetch data. For a tessellation compute kernel, this step function can be used to identify a control-point in a given patch. 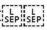
   MTLStepFunctionThreadPositionInGridY
      Use the y coordinate of the thread position in a grid as the index to fetch [[stage_in]] data or as an index into the [[stage_in]] index buffer, which is then used to fetch data. For a tessellation compute kernel, this step function can be used as the instance ID. in some embodiments, the step function may be extended to support MTLStepFunctionGeneric. If this enum is set, a specialized MTLFunction describes the step function.
- Index buffer type, which is one of the following values:
   MTLIndexTypeUInt16 = 0,
   MTLIndexTypeUInt32 = 1. 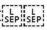
   The index buffer provides a level of indirection when reading the [[stage_in]] data in a compute kernel. For elements using a step function of MTLStepFunctionThreadPositionInGridX or MTLStepFunctionThreadPositionInGridY, this level of indirection can be used to read control-point indices that are then used to read the per-thread control-point data declared as [[stage_in]] in the compute kernel.

(B) The offset and actual maximum sizes must be specified for each dimension. The offset is used to compute the final index that is used to read the [[stage_in]] data. The actual maximum sizes for each dimension are needed because the total number of threads launched (as specified by the number of threadgroups and threadgroup size) can be larger than the actual size over which the execution is performed. The following API call is used to specify the offset and size (similar to a MTLRegion) in a compute encoder.

| | |
|---|---|
| setStageInGridOrigin: | (MTLOrigin] origin 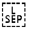 |
| size: | (MTLSize)size |

To determine the index that is used to fetch the [[stage_in]] data for a given thread in grid, the values specified by origin are added to the thread position in the grid value or the value from the index buffer (indexed by the thread position in the grid). For threads that refer to positions outside the maximum sizes for each dimension (given by size), the values returned for the [[stage_in]] data are undefined.
The grid origin and size can also be declared as arguments to a kernel in the Metal shading language using the attribute qualifiers as follows: for attribute qualifier [[grid_origin]], corresponding data types are ushort, ushort2, ushort3, uint, uint2, or uint3; and for attribute qualifier [[grid_size]], corresponding data types are ushort, ushort2, ushort3, uint, uint2, or uint3. In some embodiments, kernel arguments can only be declared with these attributes if the kernel declares an argument with the [[stage_in]] qualifier.
(C) A pointer to MTLStageInputOutputDescriptor is now a property in MTLComputePipelineDescriptor.

### Drawing tessellated primitives

To render a number of instances of tessellated patches, you can call the following drawPatches or drawIndexedPatches draw calls in MTLRenderCommandEncoder with patch data. The drawIndexedPatches calls (third and fourth calls below) support using a buffer of indices to indirectly reference the control-point indices of a patch. If the vertex function is a post-tessellation vertex function, only the drawPatches or drawIndexedPatches APIs from MTLRenderCommandEncoder can be called to render primitives. Calling the drawPrimitives or drawIndexedPrimitives APIs causes the validation layer to report an error. If the vertex function is not a post-tessellation vertex function, calling the drawPatches or drawIndexedPatches API from MTLRenderCommandEncoder causes the validation layer to report an error.

In some embodiments, there may be no support for primitive restart in drawPatches or drawIndexedPatches APIs.
- (void) drawPatches: (NSUInteger)numberOfPatchControIPoints
   patchStart: (NSUInteger)patchStart
   patchCount: (NSUInteger)patchCount
   patchIndexBuffer: (id<MTLBuffer> _Nullable)patchIndexBuffer
   patchIndexBufferOffset: (NSUInteger)patchIndexBufferOffset
   instanceCount: (NSUInteger)instanceCount
   baseInstance: (NSUInteger)baseInstance
- (void) drawPatches: (NSUInteger)numberOfPatchControIPoints patchIndexBuffer: (id<MTLBuffer> _Nullable)patchIndexBuffer patchIndexBufferOffset: (NSUInteger)patchIndexBufferOffset indirectBuffer: (id<MTLBuffer>_Nonnull)indirectBuffer indirectBufferOffset: (NSUInteger)indirectBufferOffset
- (void) drawIndexedPatches: (NSUInteger)numberOfPatchControlPoints patchStart: (NSUInteger)patchStart patchCount: (NSUInteger)patchCount patchIndexBuffer: (id<MTLBuffer> _Nullable)patchIndexBuffer patchIndexBufferOffset: (NSUInteger)patchIndexBufferOffset controlPointIndexBuffer:
   (id<MTLBuffer>_Nonnull)controlPointIndexBuffer
   controlPointIndexBufferoffset:
   (NSUInteger)controlPointIndexBufferOffset instanceCount: (NSUInteger)instanceCount baseInstance: (NSUInteger)baseInstance
- (void) drawIndexedPatches: (NSUInteger)numberOfPatchControlPoints patchIndexBuffer: (id<MTLBuffer>_Nullable)patchIndexBuffer patchIndexBufferOffset: (NSUInteger)patchIndexBufferOffset controlPointIndexBuffer:
   (id<MTLBuffer>_Nonnull)controlPointIndexBuffer
   controlPointIndexBufferOffset:
   (NSUInteger)controlPointIndexBufferOffset indirectBuffer: (id<MTLBuffer>_Nonnull)indirectBuffer indirectBufferOffset: (NSUInteger)indirectBufferOffset

For all draw patch API calls, the per-patch data and an array of patch control points are organized for rendering in contiguous array elements, starting from baseInstance. The number of patch instances rendered is specified by instanceCount. numberOfPatchControIPoints refers to the number of control-points in a patch, which must be a value between 0 and 32, inclusive. The patchStart and patchCount arguments refer to the patch start index and the number of patches in each instance of the draw call, respectively.

The second and fourth draw patch calls listed above support use a MTLBuffer (indirectBuffer) that indirectly specifies the draw call parameters in the corresponding fields of the MTLDrawPatchIndirectArguments structure defined as follows:

```
 typedef struct {
  uint32_t patchCount;
  uint32_t instanceCount;
  uint32_t patchStart;
  uint32_t baseInstance;
  } MTLDrawPatchIndirectArguments;
```

To render patch data, the drawPatches API fetches per-patch data and the control-point data. Patch data is typically stored together for all patches of one or more meshes in one or more buffers. A kernel is then run to generate the view-dependent tessellation factors. When generating the tessellation factors, we only want to generate the factors for patches that are not to be discarded, which means the patch IDs of the patches to be tessellated and rendered might not be contiguous. A buffer index (*drawPatchIndex*) in the range from [patchStart, patchStart + patchCount -1] is used to reference data. In cases where the patch indices used to fetch the patch control-point and per-patch data are not contiguous, *drawPatchIndex* can reference patchIndexBuffer. Each element of patchIndexBuffer contains a 32-bit *patchIndex* value that references the control-point and per-patch data. The *patchIndex* fetched from patchIndexBuffer is at the location: (*drawPatchIndex* ^{∗} 4) + patchIndexBufferOffset.

The control-point indices for the patch are computed by 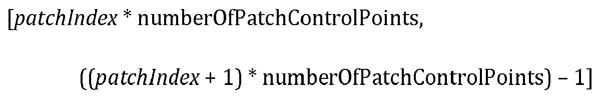 patchIndexBuffer also enables the *patchIndex* used to read the per-patch and patch control-point data to be different from the index used to read the patch tessellation factors. For the fixed-function tessellator, *drawPatchIndex* is directly used as an index to fetch patch tessellation factors.

If patchIndexBuffer is null, the *drawPatchIndex* and *patchIndex* are the same value.

In cases where control-points are shared across patches or the patch control-point data is not contiguous, use the drawIndexedPatches API. *patchIndex* references a specified controlPointIndexBuffer, which contains the control-point indices of a patch. (tessellationControlPointIndexType describes the size of the control-point indices in controlPointIndexBuffer and must be either tessellationControlPointIndexTypeUInt16 or tessellationControlPointIndexTypeUInt32.) The actual location of the first control-point index in controlPointIndexBuffer is computed as: 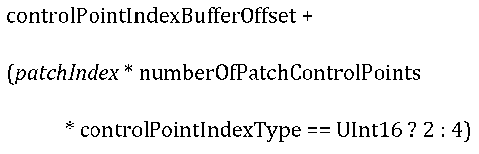 Several (numberOfPatchControlPoints) control-point indices must be stored consecutively in controlPointIndexBuffer, starting at the location of the first control-point index.

Implementation examples for porting DX11-style tessellation shaders to Apple Metal

In DX11, the HLSL vertex shader is executed for each control-point of a patch. The HLSL hull shader is specified by two functions: a function that executes for each control-point of the patch and another that executes per-patch. The output of the vertex shader is input to these two functions that make up the hull shader. Below is a very simple HLSL vertex and hull shader example, which is translated to the Metal shading language later.

```
 struct VertexIn
 {
  float3 PosL;
  float3 NormalL;
  float3 TangentL;
  float2 Tex;
 };
 
  struct VertexOut
  {
  float3 PosW : POSITION;
  float3 NormalW : NORMAL;
  float3 TangentW : TANGENT;
  float2 Tex : TEXCOORD;
  float TessFactor : TESS;
 };
 
  VertexOut VS(VertexIn vin)
  {
 VertexOut vout;
 
  // Transform to world space space.
 vout.PosW = mul(float4(vin.PosL, 1.0f), gWorld).xyz;
 vout.NormalW = mul(vin.NormalL, (float3x3)gWorldInvTranspose);
 vout.TangentW = mul(vin.TangentL, (float3x3)gWorld);
 
  // Output vertex attributes for interpolation across triangle.
 vout.Tex = mul(float4(vin.Tex, 0.0f, 1.0f), gTexTransform).xy;
 
  float d = distance(vout.PosW, gEyePosW);
 
  // Normalized tessellation factor.
  // The tessellation is
  // 0 if d >= gMinTessDistance and
  // 1 if d <= gMaxTessDistance.
  float tess = saturate((gMinTessDistance - d) /
                             (gMinTessDistance - gMaxTessDistance));
 
  // Rescale [0,1] --> [gMinTessFactor, gMaxTessFactor].
 vout.TessFactor = gMinTessFactor + tess*(gMaxTessFactor-gMinTessFactor);
 
  return vout;
  }
 
  struct HullOut
  {
  float3 PosW : POSITION;
  float3 NormalW : NORMAL;
  float3 TangentW: TANGENT;
  float2 Tex : TEXCOORD;
  };
  [domain("tri")]
  [partitioning("fractional_odd")]
  [outputtopology("triangle_cw")]
  [outputcontrolpoints(3)]
  [patchconstantfunc("PatchHS")]
  HullOut HS(InputPatch<VertexOut,3> p,
     uint i: SV_OutputControlPointID,
     uint patchId : SV_PrimitiveID)
     {
  HullOut hout;
 
  // Pass through shader.
 hout.PosW = p[i].PosW;
 hout.NormalW = p[i].NormalW;
 hout.TangentW = p[i].TangentW;
 hout.Tex = p[i].Tex;
 
  return hout;
 }
 
  struct PatchTess
  {
  float EdgeTess[3] : SV_TessFactor;
  float InsideTess : SV_InsideTessFactor;
 };
 
  PatchTess PatchHS(InputPatch<VertexOut,3> patch,
        uint patchID : SV_PrimitiveID)
        {
  PatchTess pt;
 
  // Average tess factors along edges, and pick an edge tess factor for
  // the interior tessellation. It is important to do the tess factor
  // calculation based on the edge properties so that edges shared by
  // more than one triangle will have the same tessellation factor.
  // Otherwise, gaps can appear.
  pt.EdgeTess[0] = 0.5f*(patch[l].TessFactor + patch[2].TessFactor);
  pt.EdgeTess[1] = 0.5f*(patch[2].TessFactor + patch[0].TessFactor);
  pt.EdgeTess[2] = 0.5f*(patch[0].TessFactor + patch[1].TessFactor);
  pt.InsideTess = pt.EdgeTess[0];
 
  return pt;
  }
```

The HLSL vertex and hull shaders described above can be translated to Metal functions, and a compute kernel that calls these Metal functions can be created that executes these shader functions as a single kernel. The translated vertex and control-point hull functions are called per-thread in the compute kernel, followed by a threadgroup barrier, and then the per-patch hull function is executed by a subset of the threads in the threadgroup. Being able to directly call the translated vertex and hull functions in the kernel makes it really easy for developers to port their vertex and hull shaders from DirectX or OpenGL to Metal. The HLSL vertex and hull shaders can be translated to the following Metal functions:

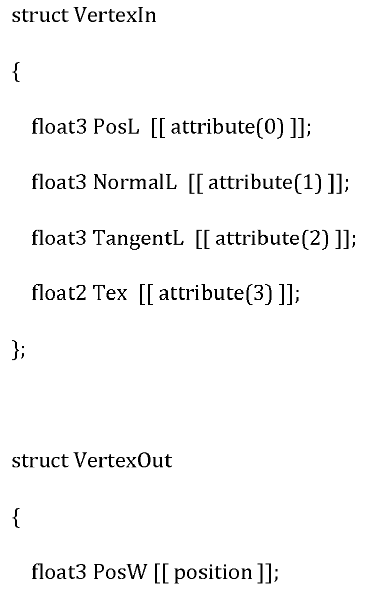

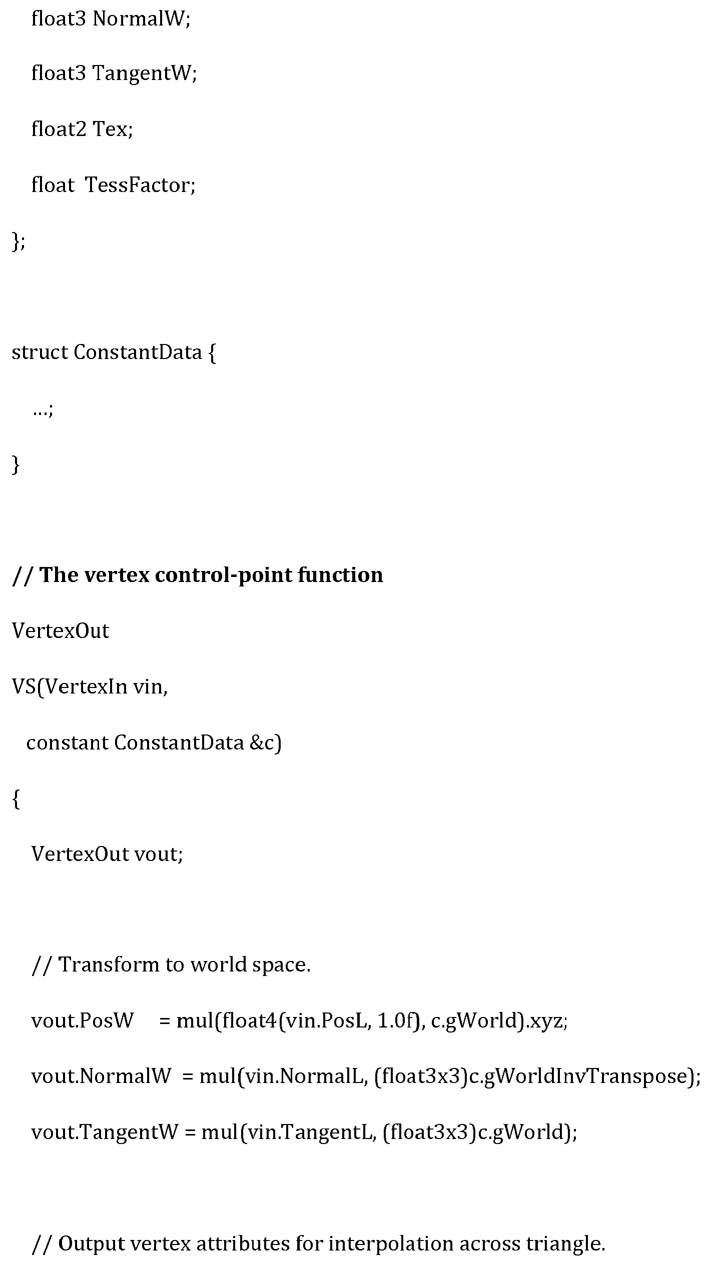

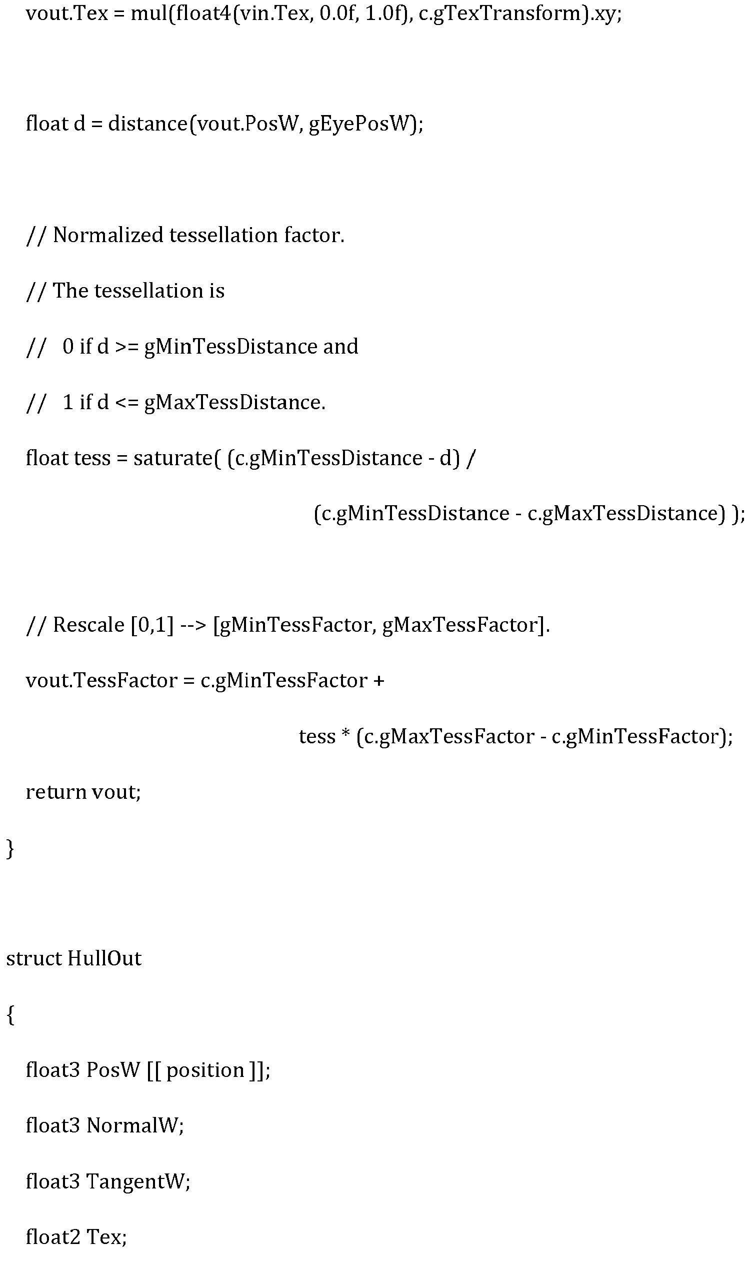

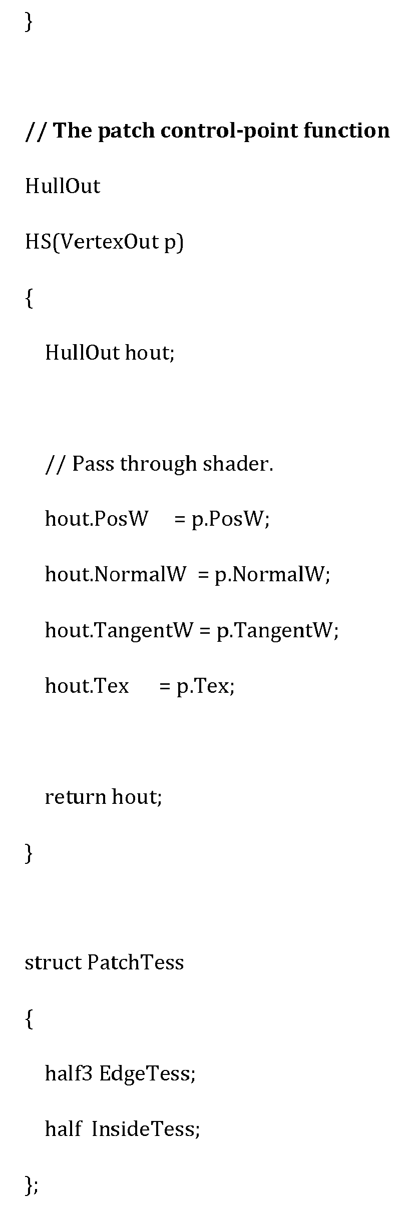

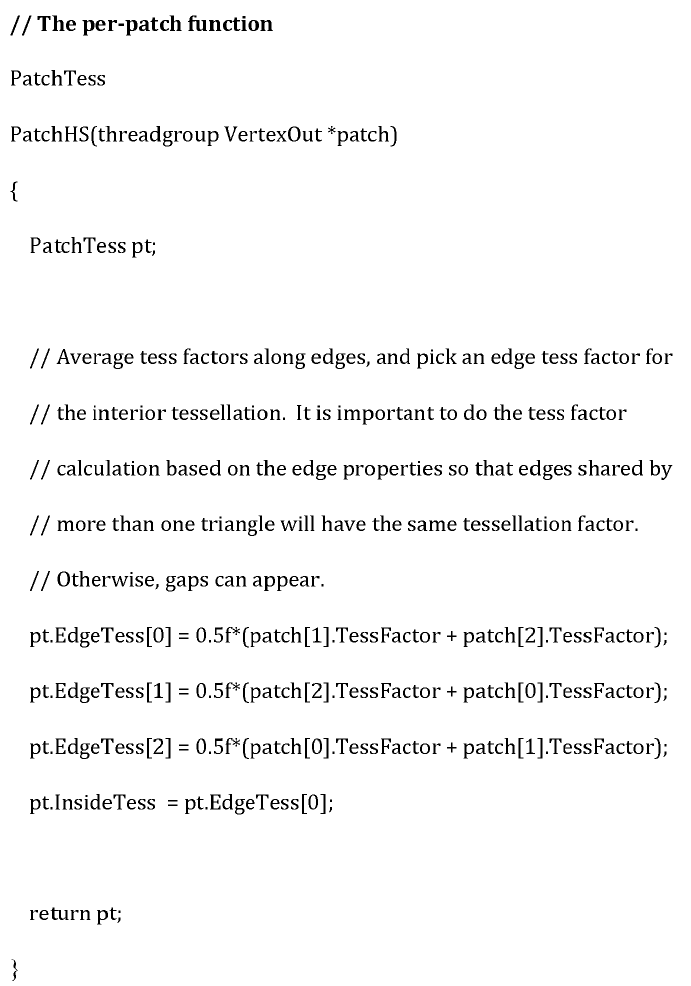

A compute kernel that calls these vertex and hull functions can be:

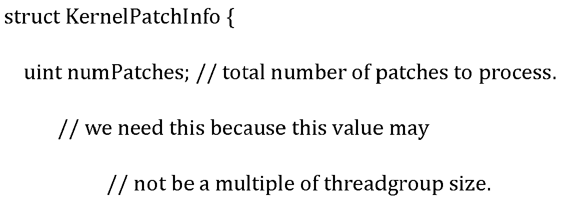

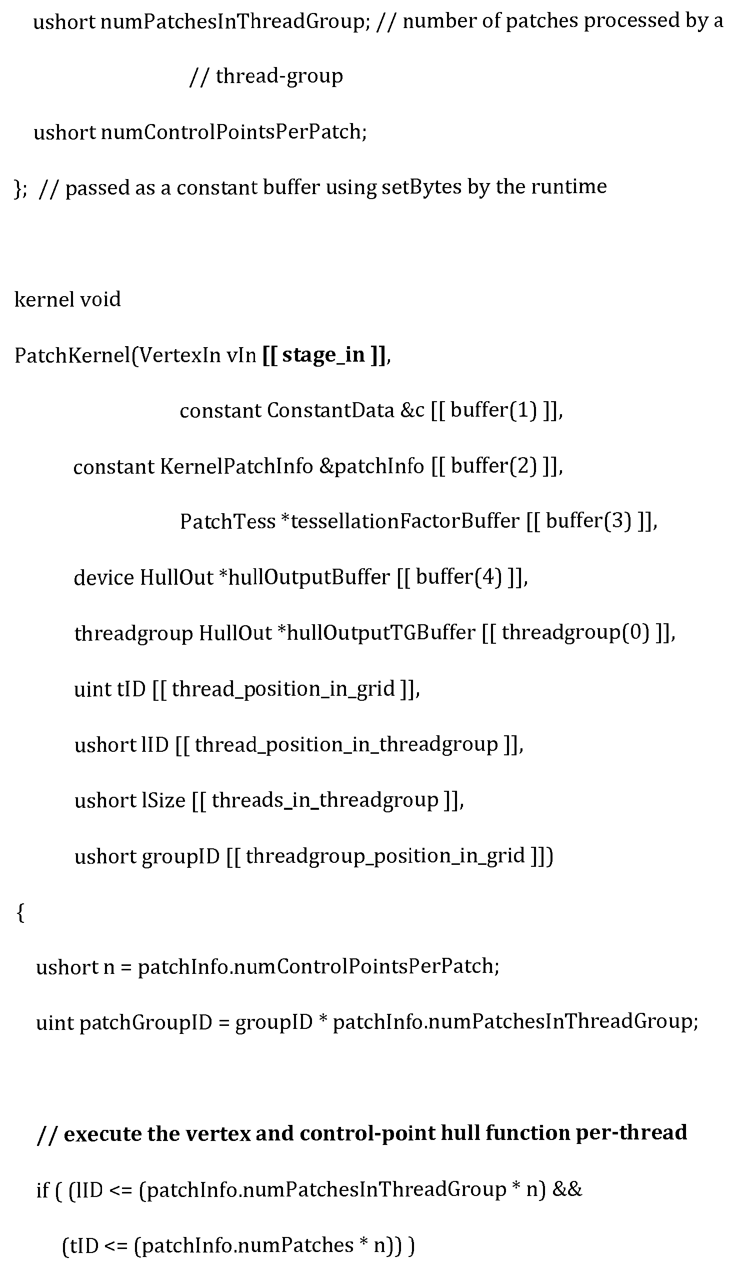

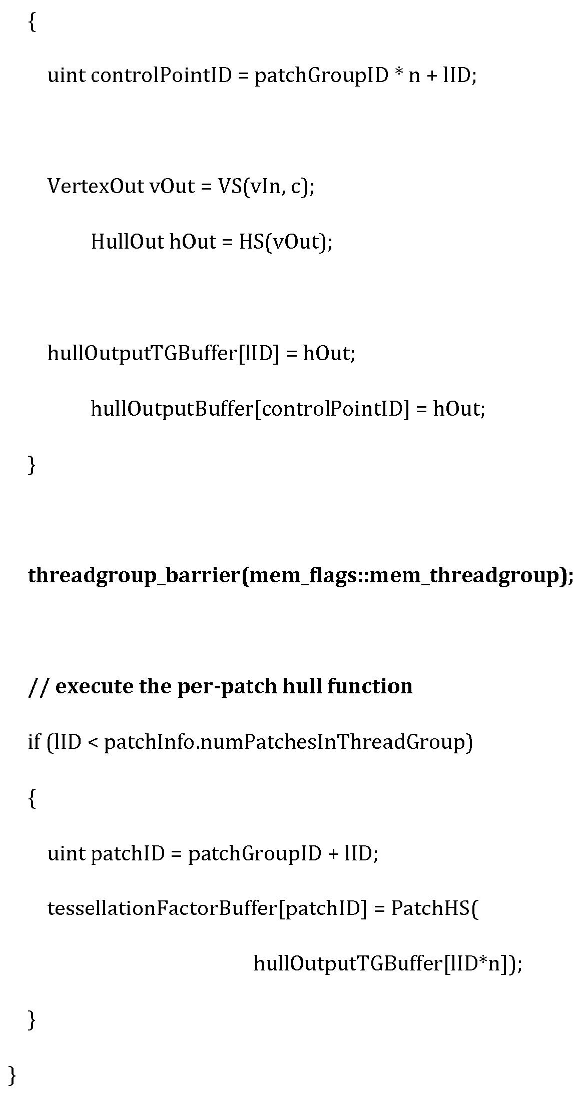

In PatchKernel, a MTLStageInputOutputDescriptor object can be used to describe the [[stage_in]] data for the input VertexIn struct:

```
 MTLStageInputOutputDescriptor* dataDesc = [[MTLStageInputOutputDescriptor alloc] init];
 dataDesc.attributes[0].format = MTLDataFormatFloat3;
 dataDesc.attributes[0].bufferIndex = 0;
 dataDesc.attributes[0].offset = 0;
 dataDesc.attributes[1].format = MTLDataFormatFloat3;
 dataDesc.attributes[1].bufferIndex = 0;
 dataDesc.attributes[1].offset = 3 * sizeof(float); //12 bytes
 dataDesc.attributes[2].format = MTLDataFormatFloat3;
 dataDesc.attributes[2].bufferIndex = 0;
 dataDesc.attributes[2].offset = 6 * sizeof(float); // 24 bytes
 dataDesc.attributes[3].format = MTLDataFormatFloat2;
 dataDesc.attributes[3].bufferIndex = 0;
 dataDesc.attributes[3].offset = 9 * sizeof(float); // 36 bytes
 dataDesc.layouts[0].stride = 11 * sizeof(float); // 44 bytes
 dataDesc.layouts[0].stepFunction =
         MTLStepFunctionThreadPositionInGridX;
         dataDesc.indexType = MTLIndexTypeUint16;
```

It is to be understood that the above description is intended to be illustrative, and not restrictive. The material has been presented to enable any person skilled in the art to make and use the invention as claimed and is provided in the context of particular embodiments, variations of which will be readily apparent to those skilled in the art (e.g., many of the disclosed embodiments may be used in combination with each other). In addition, it will be understood that some of the operations identified herein may be performed in different orders. The scope of the invention, therefore, should be determined with reference to the appended claims, along with the full scope of equivalents to which such claims are entitled. In the appended claims, the terms "including" and "in which" are used as the plain-English equivalents of the respective terms "comprising" and "wherein."

## Claims

1. A method upon a host device comprising:
receiving patch information that includes control point information regarding a first patch;
executing, upon a GPU and based upon at least a first portion of the information regarding the first patch as well as on a set of conditions, a compute kernel to generate first tessellation factors associated with the first patch, wherein the compute kernel is accessible by an application that defines the set of conditions for determining when the compute kernel executes;
storing first tessellation factors in a first memory;
reading the first tessellation factors from the first memory into a tessellator;
generating, by the tessellator and based upon the first tessellation factors, a first canonical domain;
executing, based upon the first canonical domain and at least a second portion of the information regarding the first patch, a vertex shader to generate first vertex information;
generating, based upon first vertex information, first displayable content and storing first displayable content in a buffer;
receiving, from the first memory, patch information regarding a second patch that is different from the first patch, wherein the patch information regarding the second patch includes second tessellation factors associated with the second patch, wherein the compute kernel does not execute to generate the second tessellation factors stored within the first memory based on the set of conditions;
generating, with the tessellator, a second canonical domain based upon the second tessellation factors;
executing, based upon the second canonical domain and at least a portion of the patch information regarding the second patch, the vertex shader to generate second vertex information;
generating, based upon second vertex information, second displayable content and storing the second displayable content in the buffer; and
sending the second displayable content and the first displayable content to a display device for display.

2. The method of claim 1, wherein the first portion of the patch information regarding the first patch and the second portion of the patch information regarding the first patch comprise at least some identical information.

3. The method of claims 1 or 2, wherein the patch information regarding a first patch is received by the compute kernel from the first memory.

4. The method of claims 1 through 3, wherein the second tessellation factors are received by the tessellator directly from the first memory.

5. The method of claims 1 through 4, wherein the tessellator comprises dedicated hardware.

6. The method of claims 1 through 5, wherein the first displayable content and the second displayable content are part of the same frame.

7. A non-transitory program storage device, readable by a programmable control device and comprising instructions stored thereon to cause one or more programmable control devices to perform the methods of any of claims 1 through 6.

8. A system comprising a memory and one or more programmable control devices operable to interact with the memory, and to perform operations comprising:
receiving patch information that includes control point information regarding a first patch;
executing, upon a GPU and based upon at least a first portion of the patch information regarding the first patch as well as on a set of conditions, a compute kernel to generate first tessellation factors associated with the first patch;
storing first tessellation factors in a first memory;
reading the first tessellation factors from the first memory into a tessellator;
generating, by the tessellator and based upon the first tessellation factors, a first canonical domain;
executing, based upon the first canonical domain and at least a second portion of the patch information regarding the first patch, a vertex shader to generate first vertex information;
generating, based upon first vertex information, first displayable content and storing first displayable content in a buffer;
receiving, from the first memory, patch information regarding a second patch that is different from the first patch, wherein the patch information regarding the second patch includes second tessellation factors associated with the second patch, wherein the compute kernel does not execute to generate the second tessellation factors stored within the first memory based on the set of conditions;
generating, with the tessellator, a second canonical domain based upon the second tessellation factors;
executing, based upon the second canonical domain and at least a portion of the patch information regarding the second patch, the vertex shader to generate second vertex information;
generating, based upon second vertex information, second displayable content and storing the second displayable content in the buffer; and
sending the second displayable content and the first displayable content to a display device for display.

9. The system of claim 8, wherein the first portion of the patch information regarding the first patch and the second portion of the patch information regarding the first patch comprise at least some identical information.

10. The system of claims 8 through 9, wherein the patch information regarding a first patch is received by the first compute kernel from the first memory.

11. The system of claims 8 through 10, wherein the second tessellation factors are received by the tessellator directly from the first memory.

12. The system of claims 8 through 11, wherein the tessellator comprises dedicated hardware.

13. The system of claims 8 through 12, wherein the first displayable content and the second displayable content are part of the same frame.

## Patentansprüche

1. Verfahren auf einer Hostvorrichtung, umfassend:
Empfangen von Patch-Informationen, die Kontrollpunktinformationen bezüglich eines ersten Patches enthalten;
Ausführen auf einer GPU und basierend auf mindestens einem ersten Teil der Informationen bezüglich des ersten Patches, sowie auf einen Satz von Bedingungen, eines Compute-Kernels, um erste Tessellationsfaktoren zu erzeugen, die dem ersten Patch zugeordnet sind, wobei auf den Compute-Kernel durch eine Anwendung zugegriffen werden kann, die den Satz von Bedingungen definiert, um zu bestimmen, wann der Compute-Kernel ausgeführt wird;
Speichern der ersten Tessellationsfaktoren in einem ersten Speicher;
Lesen der ersten Tessellationsfaktoren aus dem ersten Speicher in einen Tessellator;
Erzeugen durch den Tessellator und basierend auf den ersten Tessellationsfaktoren einer ersten kanonischen Domäne;
Ausführen eines Vertex-Shaders zum Erzeugen von ersten Vertex-Informationen basierend auf der ersten kanonischen Domäne und mindestens einem zweiten Teil der Informationen bezüglich des ersten Patches;
Erzeugen eines ersten anzeigbaren Inhalts basierend auf den ersten Vertex-Informationen und Speichern eines ersten anzeigbaren Inhalts in einem Puffer;
Empfangen von Patch-Informationen bezüglich eines zweiten Patches, der sich vom ersten Patch unterscheidet, aus dem ersten Speicher, wobei die Patch-Informationen bezüglich des zweiten Patches zweite Tessellationsfaktoren enthalten, die dem zweiten Patch zugeordnet sind, wobei der Compute-Kernel nicht ausgeführt wird, um die zweiten Tessellationsfaktoren zu erzeugen, die im ersten Speicher basierend auf dem Satz von Bedingungen gespeichert sind;
Erzeugen durch den Tessellator und basierend auf den zweiten Tessellationsfaktoren einer zweiten kanonischen Domäne;
Ausführen eines Vertex-Shaders zum Erzeugen von zweiten Vertex-Informationen, basierend auf der zweiten kanonischen Domäne und mindestens einem Teil der Patch-Informationen bezüglich des zweiten Patches;
Erzeugen eines zweiten anzeigbaren Inhalts basierend auf den zweiten Vertex-Informationen und Speichern des zweiten anzeigbaren Inhalts in dem Puffer; und
Senden des zweiten anzeigbaren Inhalts und des ersten anzeigbaren Inhalts zur Anzeige an ein Anzeigegerät.

2. Verfahren nach Anspruch 1, wobei der erste Teil der Patch-Informationen bezüglich des ersten Patches und der zweite Teil der Patch-Informationen bezüglich des ersten Patches mindestens einige identische Informationen umfassen.

3. Verfahren nach Anspruch 1 oder 2, wobei die Patch-Informationen bezüglich eines ersten Patches vom Compute-Kernel aus dem ersten Speicher empfangen werden.

4. Verfahren nach den Ansprüchen 1 bis 3, wobei die zweiten Tessellationsfaktoren vom Tessellator direkt aus dem ersten Speicher empfangen werden.

5. Verfahren nach den Ansprüchen 1 bis 4, wobei der Tessellator dedizierte Hardware umfasst.

6. Verfahren nach den Ansprüchen 1 bis 5, wobei der erste anzeigbare Inhalt und der zweite anzeigbare Inhalt Teil desselben Rahmens sind.

7. Nicht-flüchtige Programmspeichervorrichtung, die von einer programmierbaren Steuervorrichtung lesbar ist und Anweisungen umfasst, die darauf gespeichert sind, um zu bewirken, dass eine oder mehrere programmierbare Steuervorrichtungen die Verfahren nach einem der Ansprüche 1 bis 6 ausführen.

8. System, das einen Speicher und eine oder mehrere programmierbare Steuervorrichtungen umfasst, die betreibbar sind, um mit dem Speicher zu interagieren und um Operationen auszuführen, umfassend:
Empfangen von Patch-Informationen, die Kontrollpunktinformationen zu einem ersten Patch enthalten;
Ausführen auf einer GPU und basierend auf mindestens einem ersten Teil der Patch-Informationen bezüglich des ersten Patches, sowie auf einen Satz von Bedingungen, eines Compute-Kernels, um erste Tessellationsfaktoren zu erzeugen, die dem ersten Patch zugeordnet sind;
Speichern der ersten Tessellationsfaktoren in einem ersten Speicher;
Lesen der ersten Tessellationsfaktoren aus dem ersten Speicher in einen Tessellator;
Erzeugen durch den Tessellator und basierend auf den ersten Tessellationsfaktoren einer ersten kanonischen Domäne;
Ausführen eines Vertex-Shaders zum Erzeugen von ersten Vertex-Informationen basierend auf der ersten kanonischen Domäne und mindestens einem zweiten Teil der Patch-Informationen bezüglich des ersten Patches;
Erzeugen eines ersten anzeigbaren Inhalts basierend auf den ersten Vertex-Informationen und Speichern des ersten anzeigbaren Inhalts in einem Puffer;
Empfangen von Patch-Informationen bezüglich eines zweiten Patches, der sich von dem ersten Patch unterscheidet, aus dem ersten Speicher, wobei die Patch-Informationen bezüglich des zweiten Patches zweite Tessellationsfaktoren enthalten, die dem zweiten Patch zugeordnet sind, wobei der Compute-Kernel nicht ausgeführt wird, um die zweiten Tessellationsfaktoren zu erzeugen, die im ersten Speicher basierend auf dem Satz von Bedingungen gespeichert sind;
Erzeugen durch den Tessellator und basierend auf den zweiten Tessellationsfaktoren einer zweiten kanonischen Domäne;
Ausführen eines Vertex-Shaders zum Erzeugen von zweiten Vertex-Informationen, basierend auf der zweiten kanonischen Domäne und mindestens einem Teil der Patch-Informationen bezüglich des zweiten Patches;
Erzeugen eines zweiten anzeigbaren Inhalts basierend auf den zweiten Vertex-Informationen und Speichern des zweiten anzeigbaren Inhalts in dem Puffer; und
Senden des zweiten anzeigbaren Inhalts und des ersten anzeigbaren Inhalts zur Anzeige an ein Anzeigegerät.

9. System nach Anspruch 8, wobei der erste Teil der Patch-Informationen bezüglich des ersten Patches und der zweite Teil der Patch-Informationen bezüglich des ersten Patches mindestens einige identische Informationen umfassen.

10. System nach Anspruch 8 oder 9, wobei die Patch-Informationen bezüglich eines ersten Patches vom Compute-Kernel aus dem ersten Speicher empfangen werden.

11. System nach den Ansprüchen 8 bis 10, wobei die zweiten Tessellationsfaktoren vom Tessellator direkt aus dem ersten Speicher empfangen werden.

12. System nach den Ansprüchen 8 bis 11, wobei der Tessellator dedizierte Hardware umfasst.

13. System nach den Ansprüchen 8 bis 12, wobei der erste anzeigbare Inhalt und der zweite anzeigbare Inhalt Teil desselben Rahmens sind.

## Revendications

1. Un procédé comprenant, sur un dispositif hôte :
la réception d'une information de facette qui comprend une information de point de contrôle relative à une première facette ;
l'exécution, sur une GPU et sur la base d'au moins une première partie de l'information relative à la première facette ainsi que d'un ensemble de conditions, d'un noyau de calcul pour générer des premiers facteurs de tessellation associés à la première facette, le noyau de calcul étant accessible par une application qui définit l'ensemble de conditions pour déterminer le moment où s'exécute le noyau de calcul ;
le stockage dans une première mémoire des facteurs de tessellation ;
la lecture dans un tessellateur des premiers facteurs de tessellation à partir de la première mémoire ;
la génération, par le tessellateur et sur la base des premiers facteurs de tessellation, d'un premier domaine canonique ;
l'exécution, sur la base du premier domaine canonique et d'au moins une seconde partie de l'information relative à la première facette, d'un nuanceur de sommet pour générer une première information de sommet ;
la génération, sur la base de la première information de sommet, d'un premier contenu affichable, et le stockage dans un tampon du premier contenu affichable ;
la réception, en provenance de la première mémoire, d'une information de facette relative à une seconde facette qui est différente de la première facette, l'information de facette relative à la seconde facette comprenant des seconds facteurs de tessellation associés à la seconde facette, le noyau de calcul ne s'exécutant pas pour générer les seconds facteurs de tessellation stockés au sein de la première mémoire sur la base de l'ensemble de conditions ;
la génération, avec le tessellateur, d'un second domaine canonique sur la base des seconds facteurs de tessellation ;
l'exécution, sur la base du second domaine canonique et d'au moins une partie de l'information de facette relative à la seconde facette, du nuanceur de sommet pour générer une première information de facette ;
la génération, sur la base de la seconde information de facette, d'un second contenu affichable, et le stockage du second contenu affichable dans le tampon ; et
l'envoi du second contenu affichable et du premier contenu affichable à un dispositif afficheur pour affichage.

2. Le procédé de la revendication 1, dans lequel la première partie de l'information de facette relative à la première facette et la seconde partie de l'information de facette relative à la première facette comprennent au moins une partie d'information identique.

3. Le procédé des revendications 1 ou 2, dans lequel l'information de facette relative à une première facette est reçue par le noyau de calcul à partir de la première mémoire.

4. Le procédé des revendications 1 à 3, dans lequel les seconds facteurs de tessellation sont reçus par le tessellateur directement en provenance de la première mémoire.

5. Le procédé des revendications 1 à 4, dans lequel le tessellateur comprend des circuits matériels dédiés.

6. Le procédé des revendications 1 à 5, dans lequel le premier contenu affichable et le second contenu affichable font partie de la même trame.

7. Un dispositif de stockage non transitoire de programmes, lisible par un dispositif de contrôle programmable et comprenant des instructions stockées dessus pour faire en sorte qu'un ou plusieurs dispositifs programmables mettent en œuvre les procédés de l'une des revendications 1 à 6.

8. Un système comprenant une mémoire et un ou plusieurs dispositifs de contrôle programmables pouvant être mis en œuvre pour interagir avec la mémoire, et pour effectuer des opérations comprenant :
la réception d'une information de facette qui comprend une information de point de contrôle relative à une première facette ;
l'exécution, sur une GPU et sur la base d'au moins une première partie de l'information de facette relative à la première facette ainsi que d'un ensemble de conditions, d'un noyau de calcul pour générer des premiers facteurs de tessellation associés à la première facette ;
le stockage dans une première mémoire des facteurs de tessellation ;
la lecture dans un tessellateur des premiers facteurs de tessellation à partir de la première mémoire ;
la génération, par le tessellateur et sur la base des premiers facteurs de tessellation, d'un premier domaine canonique ;
l'exécution, sur la base du premier domaine canonique et d'au moins une seconde partie de l'information de facette relative à la première facette, d'un nuanceur de sommet pour générer une première information de sommet ;
la génération, sur la base de la première information de sommet, d'un premier contenu affichable, et le stockage dans un tampon du premier contenu affichable ;
la réception, en provenance de la première mémoire, d'une information de facette relative à une seconde facette qui est différente de la première facette, l'information de facette relative à la seconde facette comprenant des seconds facteurs de tessellation associés à la seconde facette, le noyau de calcul ne s'exécutant pas pour générer les seconds facteurs de tessellation stockés au sein de la première mémoire sur la base de l'ensemble de conditions ;
la génération, avec le tessellateur, d'un second domaine canonique sur la base des seconds facteurs de tessellation ;
l'exécution, sur la base du second domaine canonique et d'au moins une partie de l'information de facette relative à la seconde facette, du nuanceur de sommet pour générer une première information de facette ;
la génération, sur la base de la seconde information de facette, d'un second contenu affichable, et le stockage du second contenu affichable dans le tampon ; et
l'envoi du second contenu affichable et du premier contenu affichable à un dispositif afficheur pour affichage.

9. Le système de la revendication 8, dans lequel la première partie de l'information de facette relative à la première facette et la seconde partie de l'information de facette relative à la première facette comprennent au moins une partie d'information identique.

10. Le système des revendications 8 à 9, dans lequel l'information de facette relative à une première facette est reçue par le noyau de calcul à partir de la première mémoire.

11. Le système des revendications 8 à 10, dans lequel les seconds facteurs de tessellation sont reçus par le tessellateur directement en provenance de la première mémoire.

12. Le système des revendications 8 à 11, dans lequel le tessellateur comprend des circuits matériels dédiés.

13. Le système des revendications 8 à 12, dans lequel le premier contenu affichable et le second contenu affichable font partie de la même trame.
